# EUROPÄISCHE PATENTSCHRIFT

(11) **EP 4 217 416 B1**
(45) Veröffentlichungstag und Bekanntmachung des Hinweises auf die Patenterteilung: **09.04.2025**
(21) Anmeldenummer: 21778139.2
(22) Anmeldetag: 21.09.2021
(51) Int. Cl.: C08J 11/24, C08G 18/82, C08L 75/04

(54) **VERFAHREN ZUR WIEDERGEWINNUNG VON ROHSTOFFEN AUS POLYURETHANPRODUKTEN**
METHOD FOR THE RECOVERY OF RAW MATERIALS FROM POLYURETHANE PRODUCTS
PROCÉDÉ DE RÉCUPÉRATION DE MATIÈRES PREMIÈRES À PARTIR DE PRODUITS POLYURÉTHANE

(30) Priorität: 23.09.2020 EP 20197639
(43) Veröffentlichungstag der Anmeldung: 02.08.2023
(73) Patentinhaber: Covestro Deutschland AG, 51373 Leverkusen (DE)
(72) Erfinder: STEFFENS, Friedhelm, 51373 Leverkusen (DE); POHL, Sebastian, 67269 Grünstadt (DE); MAJIDI SALEHI, Shabnam, 50672 Köln (DE); KRAUSE, Jonas, 40764 Langenfeld (DE)
(74) Vertreter: Levpat
(86) Internationale Anmeldenummer: PCT/EP2021/075916
(87) Internationale Veröffentlichungsnummer: WO 2022/063764

(56) Entgegenhaltungen:
- US-A- 4 317 939
- US-A- 4 336 406

## Beschreibung

Die vorliegende Erfindung betrifft ein Verfahren zur Wiedergewinnung von Rohstoffen (d. h. von Polyolen und optional zusätzlich Aminen) aus Polyurethanprodukten, umfassend die Schritte: **(A)** Bereitstellen eines auf einer Isocyanatkomponente und einer Polyolkomponente basierenden Polyurethanprodukts; **(B)** Umsetzen des Polyurethanprodukts mit einem Alkohol in Gegenwart eines Katalysators, wobei ein erstes Produktgemisch enthaltend Alkohol, Polyole und Carbamate sowie gegebenenfalls Wasser erhalten wird; **(C)** Aufarbeiten des ersten Produktgemisches, umfassend: **(C.I)** Vermischen des in Schritt (B) erhaltenen ersten Produktgemisches mit einem organischen Lösungsmittel, das mit dem in Schritt (B) eingesetzten Alkohol mischbar ist, optional gefolgt von einer Abtrennung fester Bestandteile, unter Erhalt eines zweiten Produktgemisches; **(C.II)** Waschen des in Schritt (C.I) erhaltenen zweiten Produktgemisches mit einer wässrigen Waschflüssigkeit, wobei im zweiten Produktgemisch enthaltene Carbamate teilweise unter Freisetzung von Aminen und Alkohol hydrolysiert werden, und Phasentrennung in eine erste Lösungsmittelphase enthaltend in Schritt (C.I) eingesetztes organisches Lösungsmittel und Polyole, und eine erste wässrige Phase, enthaltend Wasser, Alkohol, Carbamate und Amine; und **(C.III)** Aufarbeiten der ersten Lösungsmittelphase unter Gewinnung der Polyole; sowie optional **(D)** Aufarbeiten der ersten wässrigen Phase unter Gewinnung eines Amins, das zu einem Isocyanat der Isocyanatkomponente korrespondiert.

Polyurethanprodukte finden vielfältige Anwendungen in der Industrie und im Alltag. Üblicherweise wird zwischen Polyurethanschäumen und sog. "CASE"-Produkten unterschieden, wobei "CASE" ein Sammelbegriff für *Polyurethan-Beschichtungen* (z. B. Lacke), *-Klebstoffe, -Dichtstoffe* und *-Elastomere* ist. Die Polyurethanschäume werden üblicherweise in Hartschäume und Weichschäume unterteilt. All diesen Produkten ist trotz ihrer Verschiedenheit die Polyurethangrundstruktur gemeinsam, die durch die Polyadditionsreaktion eines mehrwertigen Isocyanats und eines Polyols entsteht und sich beispielsweise für ein Polyurethan, das auf einem Diisocyanat **O=C=N-R-N=C=O** und einem Diol H-O-R'-O-H basiert (wobei R und R' organische Reste bezeichnen) als

~~~[O-R'-O-(O=C)-HN-R-NH-(C=O)]~~~

darstellen lässt.

Gerade wegen des großen wirtschaftlichen Erfolges der Polyurethanprodukte fallen auch große Mengen an Polyurethanabfall (z. B. aus alten Matratzen oder Sitzmöbeln) an, der einer sinnvollen Verwendung zugeführt werden muss. Die technisch am einfachsten umzusetzende Art der Wiederverwendung ist die Verbrennung unter Nutzung der freiwerdenden Verbrennungswärme für andere Prozesse, beispielweise industrielle Herstellprozesse. Auf diese Weise ist jedoch eine Schließung der Rohstoffkreisläufe nicht möglich. Eine andere Art der Wiederverwendung ist das sog. *"physikalische* Recycling", bei welchem Polyurethanabfälle mechanisch zerkleinert und in der Herstellung neuer Produkte eingesetzt werden. Dieser Art des Recyclings sind naturgemäß Grenzen gesetzt, weshalb es nicht an Versuchen gefehlt hat, die der Polyurethanproduktion *zugrunde liegenden Rohstoffe* durch Rückspaltung der Polyurethanbindungen wiederzugewinnen (sog. *"chemisches* Recycling"). Die zurückzugewinnenden Rohstoffe umfassen dabei in erster Linie Polyole (im obigen Beispiel also H-O-R'-O-H). Daneben können durch hydrolytische Spaltung der Urethanbindung auch Amine gewonnen werden (im obigen Beispiel also H₂N-R-NH₂), die sich nach Aufarbeitung zu Isocyanaten (im obigen Beispiel zu O=C=N-R-N=C=O) phosgenieren lassen.

Verschiedene Ansätze des chemischen Recyclings wurden in der Vergangenheit entwickelt. Die drei wichtigsten werden im Folgenden kurz zusammengefasst:
1. **Hydrolyse** von Urethanen durch Umsetzung mit Wasser unter Gewinnung von Aminen und Polyolen unter Bildung von Kohlenstoffdioxid.
2. **Glykolyse** von Urethanen durch Umsetzung mit Alkoholen, wobei die Polyole, die in den Urethangruppen eingebaut sind, durch den eingesetzten Alkohol ersetzt und auf diese Weise freigesetzt werden. Dieser Vorgang wird in der Literatur meist als *Umesterung* bezeichnet (genauer: *Umurethanisierung).* Diese Art des chemischen Recyclings wird unabhängig von der genauen Art des eingesetzten Alkohols in der Literatur üblicherweise als *Glykolyse* bezeichnet, obwohl dieser Begriff eigentlich nur für Glykol zutreffend ist. Im Zusammenhang mit der vorliegenden Erfindung wird daher allgemein von *Alkoholyse* gesprochen. An die Glykolyse kann sich eine Hydrolyse anschließen. Wird die Hydrolyse in Gegenwart des noch unveränderten Glykolysegemisches durchgeführt, spricht man von einer
3. **Hydroglykolyse** von Urethanbindungen durch Umsetzung mit Alkoholen *und* Wasser. Es ist natürlich ebenfalls möglich, Alkohol und Wasser von Anfang an zuzugeben, wobei die oben beschriebenen Vorgänge der Glykolyse und Hydrolyse parallel ablaufen.

Eine Zusammenfassung der bekannten Verfahren des Polyurethanrecyclings bietet der Übersichtsartikel von Simón, Borreguero, Lucas und Rodriguez in Waste Management 2018, 76, 147 - 171 [1]. Als besonders bedeutsam wird dort die Glykolyse (Nr. 2 oben) herausgestellt. Bei der Glykolyse wird zwischen "zweiphasigen" und "einphasigen" Prozessführungen unterschieden, je nachdem, ob sich das erhaltene rohe Verfahrensprodukt der Umsetzung mit dem Alkohol in zwei Phasen trennt oder nicht. Ob dies der Fall ist, hängt insbesondere von der Wahl des eingesetzten Alkohols und den Verfahrensbedingungen ab (insbesondere Anteil des eingesetzten Alkohols an der Reaktionsmischung sowie auch Temperatur). In dem genannten Übersichtsartikel wird die zweiphasige Verfahrensführung unter Anwendung rohen Glycerins (etwa Abfälle aus der Herstellung von Biodiesel) favorisiert, da sie das höchste Potenzial habe, mit geringen Produktionskosten qualitativ hochwertige Produkte zurückzugewinnen (wobei der Fokus klar auf der Wiedergewinnung der Polyole liegt).

Infolge des zusätzlichen Einsatzes von Wasser ist das Verfahrensprodukt von Hydroglykolysen (Nr. 3 oben) stets zweiphasig. Braslaw und Gerlock beschreiben in Ind. Eng. Chem. Process Des. Dev. 1984, 23, 552 - 557 [2] die Aufarbeitung eines solchen Verfahrensproduktes umfassend die Abtrennung des Wassers (durch Phasentrennung im Labormaßstab oder Verdampfung im für großtechnische Anwendungen vorgeschlagenen sog. *"Ford-Hydroglykolyse-Prozess"*) und Extraktion der verbleibenden organischen Phase mit Hexadecan unter Ausbildung einer Alkoholphase, aus welcher Amin gewonnen werden kann, und einer Hexadecan-Phase, aus welcher Polyol gewonnen werden kann. Obwohl die Möglichkeit der Wiedergewinnung von Amin erwähnt wird, liegt auch in diesem Artikel der Schwerpunkt auf der Rückgewinnung von Polyolen.

Ein Patent auf einen nach diesen Prinzipien arbeitenden Prozess wurde unter der Nummer US 4,336,406 erteilt. Dort wird ein Verfahren zur Rückgewinnung von Polyetherpolyol aus einem Polyurethan beschrieben, welches darin besteht, dass man stufenweise:
(a) durch Auflösung dieses Polyurethans in einem gesättigten Alkohol mit einem Siedepunkt von 225 °C bis 280 °C bei einer Temperatur von 185 °C bis 220 °C unter einer nichtoxydierenden Atmosphäre eine Lösung bildet;
(b) diese Lösung unter dieser nichtoxydierenden Atmosphäre in Gegenwart eines Alkalihydroxyd-Katalysators mit Wasser für die erforderliche Zeit reagieren lässt, um die hydrolysierbaren Auflösungsprodukte weitgehend zu Aminen und Alkohol zu hydrolysieren, während man diese Lösung bei einer Temperatur von 175 °C bis 220 °C hält, wobei dieser Alkalihydroxyd-Katalysator der Lösung in einer Menge im Bereich von mindestens 0,1 Massen-%, bezogen auf die Masse dieses Polyurethanschaums, zugesetzt wird;
(c) das nach der Hydrolyse verbleibende Wasser aus dieser Lösung unter einer nichtoxydierenden Atmosphäre entfernt;
(d) dieses Polyol unter einer nichtoxydierenden Atmosphäre mit einem Alkan, das mit diesem Alkohol im Wesentlichen nicht mischbar ist und einen Siedepunkt von 230 °C bis 300 °C aufweist (insbesondere Hexadecan), aus der hydrolysierten Lösung extrahiert;
   und
(e) das extrahierte Polyol einer Vakuumreinigung bei einer Temperatur unterhalb 230 °C unterzieht.

In Schritt (a) erfolgt eine Reaktion des Polyurethans mit den Alkoholgruppen des gesättigten Alkohols unter Bildung von Polyolen, Harnstoffen und Carbamaten (siehe Spalte 3, Zeilen 42 bis 46).

In Schritt (b) wird zu der in Schritt (a) erhaltenen Lösung Wasser und Alkalihydroxyd-Katalysator gegeben, entweder getrennt oder in Form einer wässrigen Katalysatorlösung, wodurch Carbamate und Harnstoffe zu Aminen und Alkohol zersetzt werden. Die Schritte (a) und (b) sind in ihrer Gesamtheit als Hydroglykolyse (genauer: Hydroalkoholyse) mit zeitversetzter Zugabe von Alkohol und Wasser aufzufassen. Wasser wird in einer solchen Menge zugegeben, dass die Lösung bei Temperaturen zwischen 175 °C und 200 °C siedet. Im Fall von Diethylenglykol als Alkohol wird das Wasser in einer Menge zwischen 2,4 % und 0,6 %, vorzugsweise 1,1 %, der Masse des eingesetzten Diethylenglykols zugegeben (siehe Spalte 4, Zeilen 39 bis 46). In der Hydrolyse verbrauchtes Wasser wird durch Zugabe weiteren Wassers ersetzt, um den Wassergehalt konstant zu halten. Nach erfolgter Hydrolyse muss das verwendete Wasser in Schritt (c) entfernt werden (Spalte 5, Zeilen 31 bis 33), bevor die Extraktion in Schritt (e) erfolgen kann.

US 4,317,939 beschreibt ein Verfahren, bei dem ein Polyurethanschaum zunächst in einem Alkohol gelöst, dann Wasser und ein Katalysator zugegeben werden und die Reaktionsmischung unter Rückfluss erhitzt wird. Das erhaltene Reaktionsprodukt ist entweder einphasig, in welchem Fall es durch Vakuumdestillation gereinigt wird, oder zweiphasig, in welchem Fall eine Polyolphase abgetrennt und diese durch Vakuumdestillation gereinigt wird. Die auf diese Weise zurückgewonnenen Polyole können in der Herstellung neuer Polyurethanschäume eingesetzt werden.

Nur wenige der literaturbekannten Prozesse des chemischen Recyclings werden dauerhaft im großtechnischen Maßstab betrieben; viele haben noch nicht einmal den Pilotierungsmaßstab erreicht [1]. Angesichts des allgemein gestiegenen Umweltbewusstseins und verstärkter Bestrebungen, industrielle Prozesse möglichst nachhaltig auszugestalten - was beides grundsätzlich für ein chemisches Recycling spricht - zeigt dies augenscheinlich, dass das chemische Recycling von Polyurethanprodukten unter technischen und wirtschaftlichen Gesichtspunkten noch längst nicht ausgereift ist. Herausforderungen bestehen insbesondere bezüglich der Reinheit der zurückgewonnenen Produkte. Polyole müssen möglichst ohne Aminverunreinigungen zurückgewonnen werden, um etwa beim Wiedereinsatz in der Herstellung von Polyurethanschäumen das Schaumbildungsverhalten nicht nachteilig zu beeinflussen. Ist auch eine Wiedergewinnung von Aminen angestrebt, so müssen auch diese selbstredend in möglichst hoher Reinheit gewonnen werden. Daneben enthalten die wiederzuverwertenden Polyurethanprodukte meist noch diverse Hilfs- und Zusatzstoffe (Stabilisatoren, Katalysatoren und dgl. mehr), die wirtschaftlich und umweltschonend von den eigentlichen Zielprodukten des Recyclings abgetrennt und entsorgt werden müssen. Ferner muss ein wirtschaftlich arbeitendes Recyclingverfahren sicherstellen, dass die eingesetzten Reagenzien (beispielsweise eingesetzte Alkohole) möglichst vollständig zurückgewonnen und erneut eingesetzt (also im Kreis geführt) werden können.

Es bestand also ein Bedarf an weiteren Verbesserungen auf dem Gebiet des chemischen Recyclings von Polyurethanprodukten. Insbesondere wäre es wünschenswert, Polyole und vorzugsweise auch Amine in hoher Reinheit und effizient aus Polyurethanprodukten wiedergewinnen zu können, und zwar insbesondere in einer Art und Weise, die einen großtechnischen Einsatz wirtschaftlich erstrebenswert machen würde. Weiterhin wäre es wünschenswert, einen unter wirtschaftlichen und ökologischen Gesichtspunkten akzeptablen Auslass für die in den Polyurethanprodukten vorhandenen Hilfs- und Zusatzstoffe zur Verfügung zu haben.

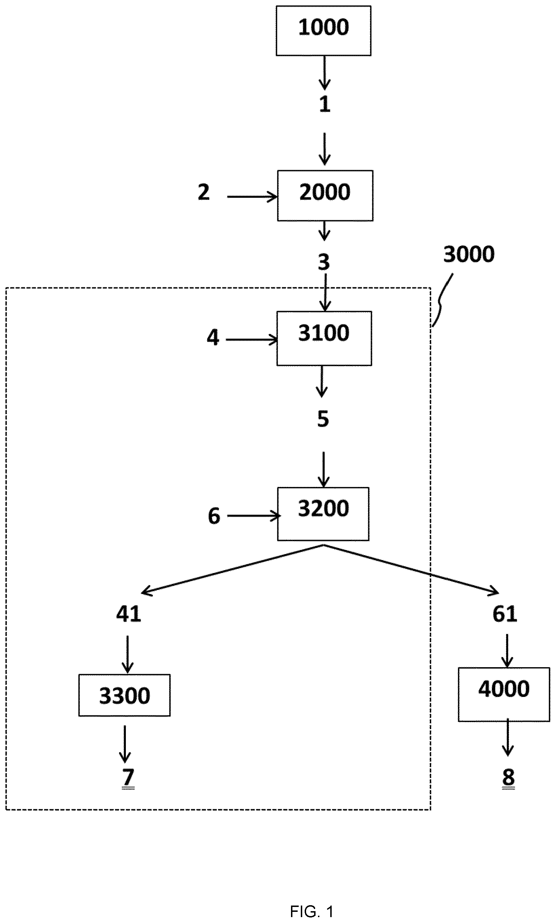

Diesem Bedarf Rechnung tragend ist ein Gegenstand der vorliegenden Erfindung ein **Verfahren zur Wiedergewinnung von Rohstoffen (also von Polyolen und optional Aminen) aus Polyurethanprodukten,** umfassend die Schritte (vgl. auch **FIG. 1****):**
(A) - **1000** - Bereitstellen eines auf einer Isocyanatkomponente und einer Polyolkomponente basierenden Polyurethanprodukts **(1);**
(B) - **2000** - Umsetzen des Polyurethanprodukts **(1)** mit einem (ein- oder mehrwertigen) Alkohol **(2)** in Gegenwart eines Katalysators, wobei ein **erstes Produktgemisch (3)** enthaltend (nicht umgesetzten) Alkohol, Polyole (nämlich die Polyole, welche die Polyolkomponente ausmachen und/oder Polyole, die gegebenenfalls bei der Umsetzung mit dem Alkohol **(2)** aus der ursprünglichen Polyolkomponente gebildet werden) und Carbamate sowie gegebenenfalls Wasser erhalten wird;
(C) - **3000** - Aufarbeiten des ersten Produktgemisches **(3),** umfassend:
   (C.I) - **3100** -Vermischen des in Schritt (B) erhaltenen ersten Produktgemisches **(3)** mit einem (wasserunlöslichen) organischen Lösungsmittel **(4),** das mit dem in Schritt (B) eingesetzten Alkohol **(2)** mischbar ist, optional gefolgt von einer Abtrennung fester Bestandteile, unter Erhalt eines **zweiten Produktgemisches (5);**
   (C.II) - **3200** - (ein- oder mehrstufiges, insbesondere zweistufiges) Waschen des in Schritt (C.I) erhaltenen zweiten Produktgemisches **(5)** mit einer wässrigen Waschflüssigkeit **(6),** wobei im zweiten Produktgemisch **(5)** enthaltene Carbamate teilweise unter Freisetzung von Aminen und Alkohol hydrolysiert werden, und Phasentrennung in
      eine **erste Lösungsmittelphase (41)** enthaltend in Schritt (C.I) eingesetztes organisches Lösungsmittel und Polyole (d. h. mindestens einen ersten Teil der Polyole aus dem ersten Produktgemisch; daher kann die erste Lösungsmittelphase auch als *erste Polyolphase* bezeichnet werden), und
      eine **erste wässrige Phase (61),** enthaltend Wasser, (in Schritt (B) eingesetzten und dort nicht umgesetzten sowie in Schritt (C.II) bei der teilweisen Hydrolyse der Carbamate freigesetzten) Alkohol, Carbamate und Amine (sowie aus dem Polyurethanprodukt stammende Verunreinigungen);
   (C.III) - **3300** - Aufarbeiten der ersten Lösungsmittelphase unter Gewinnung der Polyole;
   und optional (und bevorzugt)
(D) - **4000** - Aufarbeiten der ersten wässrigen Phase unter Gewinnung (mindestens) eines Amins **(8),** das zu einem Isocyanat der Isocyanatkomponente korrespondiert.

*Polyurethanprodukte* im Sinne der vorliegenden Erfindung sind die Polyadditionsprodukte (bisweilen, wenn auch nicht ganz korrekt, auch als Polykondensationsprodukte bezeichnet) von mehrwertigen *Isocyanaten* (= Iscocyanatkomponente der Polyurethanherstellung) und *Polyolen* (= Polyolkomponente der Polyurethanherstellung). Polyurethanprodukte enthalten im Allgemeinen neben der oben skizzierten Polyurethangrundstruktur noch andere Strukturen, zum Beispiel Strukturen mit Harnstoffbindungen. Das Vorliegen derartiger von der reinen Polyurethangrundstruktur abweichender Strukturen neben Polyurethanstrukturen verlässt den Rahmen der vorliegenden Erfindung nicht.

In der Terminologie der vorliegenden Erfindung umfasst der Begriff *Isocyanate* alle dem Fachmann im Zusammenhang mit der Polyurethanchemie bekannten Isocyanate wie insbesondere Toluylendiisocyanat (TDI; herstellbar und bevorzugt hergestellt aus Toluylendiamin, TDA), die Di- und Polyisocyanate der Diphenylmethanreihe (MDI; herstellbar und bevorzugt hergestellt aus den Di- und Polyaminen der Diphenylmethanreihe, MDA), 1,5-Pentandiisocyanat (PDI; herstellbar und bevorzugt hergestellt aus 1,5-Pentandiamin, PDA), 1,6-Hexamethylendiisocyanat (HDI; herstellbar und bevorzugt hergestellt aus 1,6-Hexamethylendiamin, HDA), Isophorondiisocyanat (IPDI; herstellbar und bevorzugt hergestellt aus Isophorondiamin, IPDA) und Xylylendiisocyanat (XDI; herstellbar und bevorzugt hergestellt aus Xylylendiamin, XDA). Der Ausdruck *"ein Isocyanat"* umfasst selbstverständlich auch Ausführungsformen, in denen zwei oder mehr unterschiedliche Isocyanate (z. B. Gemische aus MDI und TDI) in der Herstellung des Polyurethanprodukts eingesetzt wurden, es sei denn, etwas anderes wird ausdrücklich zum Ausdruck gebracht, etwa durch die Formulierung *"genau ein Isocyanat".* Dies gilt auch innerhalb einer *Isocyanatklasse* (gilt also z. B. auch für verschiedene MDI-Typen). Die Gesamtheit aller in der Herstellung des Polyurethanprodukts eingesetzten Isocyanate wird als *Isocyanatkomponente* (des Polyurethanprodukts) bezeichnet. Die Isocyanatkomponente umfasst mindestens ein Isocyanat. Analog wird Gesamtheit aller in der Herstellung des Polyurethanprodukts eingesetzten Poloyle als *Polyolkomponente* (des Polyurethanprodukts) bezeichnet. Die Polyolkomponente umfasst mindestens ein Polyol.

Unter *Isocyanatklassen* werden in der Terminologie der vorliegenden Erfindung Isocyanate mit der gleichen chemischen Grundstruktur verstanden, wobei Unterschiede in einem Substitutionsmuster noch nicht als Abweichung von der chemischen Grundstruktur angesehen werden. So gehören TDI und MDI zu verschiedenen Isocyanatklassen, nicht jedoch ihre jeweiligen Isomere untereinander. Beispielsweise gehören alle Isomere des TDI (von denen 2,4-TDI und 2,6-TDI die bedeutsamsten sind) zur gleichen "Isocyanatklasse TDI", ebenso wie alle Isomere der Diisocyanate der Diphenylmethanreihe (von denen 2,4'-MDI und 4,4'-MDI die bedeutsamsten sind) zur gleichen "Isocyanatklasse MDI" gehören. Auch die MDI-Typen mit drei oder mehr "Benzolkernen" werden der "Isocyanatklasse MDI" zugerechnet. Für die *Aminklassen* gilt Entsprechendes.

In der Terminologie der vorliegenden Erfindung umfasst der Begriff *Polyole* alle dem Fachmann im Zusammenhang mit der Polyurethanchemie bekannten Polyole wie insbesondere Polyetherpolyole, Polyesterpolyole, Polyetherester-Polyole und Polyethercarbonatpolyole. Der Ausdruck *"ein Polyol"* umfasst selbstverständlich auch Ausführungsformen, in denen zwei oder mehr unterschiedliche Polyole in der Herstellung des Polyurethanprodukts eingesetzt wurden. Dies gilt auch innerhalb einer Polyolklasse. Wird daher im Folgenden beispielsweise von *"einem Polyetherpolyol"* (oder *"einem Polyesterpolyol"* usw.) gesprochen, so umfasst diese Terminologie selbstverständlich auch Ausführungsformen, in denen zwei oder mehr verschiedene Polyetherpolyole (oder zwei oder mehr verschiedene Polyesterpolyole usw.) in der Herstellung des Polyurethanprodukts eingesetzt wurden.

Als *Carbamate* werden in der Terminologie der vorliegenden Erfindung die durch die Reaktion mit dem Alkohol *in Schritt (B) gebildeten* Urethane bezeichnet.

Ein *zu einem Isocyanat korrespondierendes Amin* bezeichnet dasjenige Amin, durch dessen Phosgenierung das Isocyanat gemäß *R-NH₂ + COCl₂* → *R-N=C=O + 2 HCl* erhalten werden kann. Analog dazu bezeichnet eine *zu einem Amin korrespondierende Nitroverbindung* diejenige Nitroverbindung, durch deren Reduktion gemäß *R-NO₂* + *3 H₂* → *R-NH₂* + *2 H₂O* das Amin erhalten werden kann.

Die erfindungsgemäße Forderung, dass das in Schritt (C.I) einzusetzende organische Lösungsmittel *mit dem in Schritt (B) eingesetzten Alkohol mischbar ist,* bedeutet, dass sich - unter den für Schritt (C.I) vorliegenden Bedingungen von Temperatur und Verhältnis von organischem Lösungsmittel zu Alkohol aus Schritt (B) - eine Mischung aus dem organischen Lösungsmittel und dem Alkohol aus Schritt (B) nicht spontan in zwei Phasen trennt.

Die *erste wässrige Phase* ist im Allgemeinen eine klare wässrige Phase. Es ist jedoch nicht ausgeschlossen und verlässt den Rahmen der Erfindung nicht, dass die erste wässrige Phase eine Emulsion enthält (also ihrerseits eine *klare Phase* und eine *Emulsionsphase* umfasst, in welchem Fall in der Terminologie der vorliegenden Erfindung **die Gesamtheit** aus klarer Phase und Emulsionsphase als *erste wässrige Phase* aufzufassen ist) oder sogar eine Emulsion darstellt (also **in ihrer Gesamtheit** eine Emulsionsphase ist). Mit *Emulsion* ist in diesem Zusammenhang eine Emulsion aus in wässrigem Medium emulgierten organischen Bestandteilen gemeint.

Unter dem Begriff *aus dem Polyurethanprodukt stammende Verunreinigungen* werden im Rahmen der vorliegenden Erfindung solche Stoffe aus der Herstellung des Polyurethanprodukts verstanden, die nicht in einem chemischen Recycling als Polyole oder Amine wiedergewonnenen werden können, also insbesondere Hilfs- und Zusatzstoffe aus der Herstellung des Polyurethanprodukts (Stabilisatoren, Katalysatoren, Polymerpartikel und dgl. mehr).

In den beigefügten Zeichnungen zeigen:
- **FIG. 1**: eine schematische Darstellung des erfindungsgemäßen Verfahrens in der einfachsten Ausgestaltung (wobei die Rückgewinnung des Amins **(8)** aus der ersten wässrigen Phase **(61)** optional ist);
- **FIG. 2**: eine schematische Darstellung einer bevorzugten Ausführungsform des Schrittes zur Gewinnung von Aminen (= Schritt (D));
- **FIG. 3**: eine schematische Darstellung eines Herstellprozesses eines Amins, der mit Schritt (D) kombiniert werden kann;
- **FIG. 4**: eine mögliche Ausgestaltung einer Kombination des Herstellprozesses eines Amins mit Schritt (D) und
- **FIG. 5**: eine weitere mögliche Ausgestaltung einer Kombination des Herstellprozesses eines Amins mit Schritt (D).
Es folgt zunächst eine Kurzzusammenfassung verschiedener möglicher **Ausführungsformen der Erfindung:**
In einer **ersten Ausführungsform** der Erfindung, die mit allen anderen Ausführungsformen kombiniert werden kann, werden in Schritt (C.I) das erste Produktgemisch und das organische Lösungsmittel in einem Massenverhältnis im Bereich von 5 : 1 bis 1 : 3 vermischt.

In einer **zweiten Ausführungsform** der Erfindung, die mit allen anderen Ausführungsformen kombiniert werden kann, wird die erste Lösungsmittelphase in Schritt (C.III) einer Destillation und/oder Strippung mit einem Strippgas (wie insbesondere Stickstoff oder Wasserdampf, bevorzugt Stickstoff) unterzogen.

In einer **dritten Ausführungsform** der Erfindung, die eine besondere Ausgestaltung der zweiten Ausführungsform ist, umfasst das Verfahren in Schritt (C.III) eine Destillation in einem Verdampfer ausgewählt aus der Gruppe bestehend aus Fallfilmverdampfern, Dünnschichtverdampfern, Flashverdampfern, Steigfilmverdampfern, Naturumlaufverdampfern, Zwangsumlaufverdampfern und Kesselverdampfern.

In einer **vierten Ausführungsform** der Erfindung, die eine besondere Ausgestaltung der dritten Ausführungsform ist, umfasst das Verfahren in Schritt (C.III) eine der Destillation nachgeschaltete Strippung mit Wasserdampf.

In einer **fünften Ausführungsform** der Erfindung, die mit allen anderen Ausführungsformen außer solchen, die eine *meh*rstufige Wäsche in Schritt (C.II) vorsehen, kombiniert werden kann, umfasst Schritt (C.II) genau eine Waschstufe, in welcher ein Massenverhältnis von zweitem Produktgemisch zu eingesetzter wässriger Waschflüssigkeit in einem Bereich von 20 : 1 bis 1 : 1 eingehalten wird.

In einer **sechsten Ausführungsform** der Erfindung, die mit allen anderen Ausführungsformen außer solchen, die eine *ein*stufige Wäsche in Schritt (C.II) vorsehen, kombiniert werden kann, umfasst Schritt (C.II) mindestens (bevorzugt genau) zwei Waschstufen, wobei nach jeder Waschstufe eine Phasentrennung unter Erhalt einer Lösungsmittelphase und einer wässrigen Phase vorgenommen wird, wobei die in der letzten Waschstufe erhaltene Lösungsmittelphase die erste Lösungsmittelphase ist und die erste wässrige Phase (mindestens) die in der ersten Waschstufe erhaltene wässrige Phase umfasst.

In einer **siebten Ausführungsform** der Erfindung, die eine besondere Ausgestaltung der sechsten Ausführungsform ist, wird in jeder Waschstufe ein Massenverhältnis
von
dem in einer Waschstufe zu waschendem zweitem Produktgemisch bzw. der zu waschenden Lösungsmittelphase
   zu
in einer Waschstufe eingesetzten wässrigen Waschflüssigkeit
im Bereich von 20 : 1 bis 1 : 1 eingehalten.

In einer **achten Ausführungsform** der Erfindung, die eine besondere Ausgestaltung der sechsten und siebten Ausführungsform ist, wird die in der Phasentrennung nach der ersten Waschstufe erhaltene Lösungsmittelphase einer Verdampfung organischen Lösungsmittels unterzogen und die auf diese Weise erhaltene an organischem Lösungsmittel abgereicherte (aufkonzentrierte) Phase der zweiten Waschstufe zugeführt.

In einer **neunten Ausführungsform** der Erfindung, die eine besondere Ausgestaltung achten Ausführungsform ist, wird das in der Verdampfung gewonnene organische Lösungsmittel (gegebenenfalls nach einer Aufreinigung) in Schritt (C.I) zurückgeführt.

In einer **zehnten Ausführungsform** der Erfindung, die eine besondere Ausgestaltung der sechsten bis neunten Ausführungsform ist, werden die in den mindestens (bevorzugt genau) zwei Waschstufen erhaltenen wässrigen Phasen zur ersten wässrigen Phase vereinigt.

In einer **elften Ausführungsform** der Erfindung, die mit allen anderen Ausführungsformen kombiniert werden kann, umfasst das Verfahren den Schritt (D).

In einer **zwölften Ausführungsform** der Erfindung, die eine besondere Ausgestaltung der elften Ausführungsform ist, umfasst Schritt (D):
(D.I) Vermengen der ersten wässrigen Phase mit einem organischen Lösungsmittel (insbesondere mit dem gleichen organischen Lösungsmittel, das in Schritt (C.I) eingesetzt wird) und Phasentrennung in
eine **zweite Lösungsmittelphase** enthaltend in Schritt (D.I) eingesetztes organisches Lösungsmittel und Polyole (d. h. einen zweiten Teil der Polyole aus dem ersten Produktgemisch, der kleiner ist als der erste Teil der Polyole; daher kann die zweite Lösungsmittelphase auch als *zweite Polyolphase* bezeichnet werden) und
eine **zweite wässrige Phase** enthaltend Alkohol, Carbamate und Amine (sowie aus dem Polyurethanprodukt stammende Verunreinigungen).

In einer **dreizehnten Ausführungsform** der Erfindung, die eine besondere Ausgestaltung der elften und zwölften Ausführungsform ist, umfasst Schritt (D):
(D.II.a) Hydrolysieren (insbesondere in Gegenwart eines Katalysators) der in der ersten wässrigen Phase oder, bei Durchführung von Schritt (D.I), in der zweiten wässrigen Phase, enthaltenen Carbamate unter Erhalt eines **dritten Produktgemisches** enthaltend Wasser, (in der Hydrolyse freigesetzten und bereits vorher in der ersten bzw. zweiten wässrigen Phase enthaltenen) Alkohol und (in der Hydrolyse freigesetzte und bereits vorher in der ersten bzw. zweiten wässrigen Phase enthaltene) Amine (sowie aus dem Polyurethanprodukt stammende Verunreinigungen);
(D.III.a) Verdampfen von Wasser (gegebenenfalls - insbesondere bei Durchführung von Schritt (D.I) - gemeinsam mit Restbestandteilen an organischem Lösungsmittel) aus dem dritten Produktgemisch unter Verbleib eines **Amin-Alkohol-Gemisches** (enthaltend aus dem Polyurethanprodukt stammende Verunreinigungen);
(D.IV.a) Verdampfen einer Alkoholfraktion aus dem Amin-Alkohol-Gemisch unter Verbleib einer Aminphase (enthaltend aus dem Polyurethanprodukt stammende Verunreinigungen);
(D.V) Gewinnen (mindestens) eines Amins, das zu einem Isocyanat der Isocyanatkomponente korrespondiert, aus der Aminphase.

In einer **vierzehnten Ausführungsform** der Erfindung, die eine besondere Ausgestaltung der dreizehnten Ausführungsform ist, wird das in Schritt (D.III.a) verdampfte Wasser (gegebenenfalls nach einer Aufreinigung) in Schritt (C.II) als Bestandteil der wässrigen Waschflüssigkeit zurückgeführt.

In einer **fünfzehnten Ausführungsform** der Erfindung, die eine besondere Ausgestaltung der dreizehnten und vierzehnten Ausführungsform ist, wird die in Schritt (D.IV.a) verdampfte Alkoholfraktion in Schritt (B) zurückgeführt.

In einer **sechzehnten Ausführungsform** der Erfindung, die eine weitere besondere Ausgestaltung der elften und zwölften Ausführungsform ist, umfasst Schritt (D):
(D.II.b) Verdampfen einer Wasser-Alkohol-Fraktion aus der ersten wässrigen Phase, oder, bei Durchführung von Schritt (D.I), aus der zweiten wässrigen Phase, unter Verbleib einer **Carbamatphase** (enthaltend aus dem Polyurethanprodukt stammende Verunreinigungen);
(D.III.b) Hydrolysieren (insbesondere in Gegenwart eines Katalysators) der in der Carbamatphase enthaltenen Carbamate unter Erhalt eines **dritten Produktgemisches** enthaltend Wasser, (in der Hydrolyse freigesetzten und bereits vorher in der ersten bzw. zweiten wässrigen Phase enthaltenen) Alkohol und (in der Hydrolyse freigesetzte und bereits vorher in der ersten bzw. zweiten wässrigen Phase enthaltene) Amine (sowie aus dem Polyurethanprodukt stammende Verunreinigungen);
(D.IV.b) Verdampfen einer Alkoholfraktion aus dem dritten Produktgemisch unter Erhalt einer **Aminphase** (enthaltend aus dem Polyurethanprodukt stammende Verunreinigungen);
(D.V) Gewinnen (mindestens) eines Amins, das zu einem Isocyanat der Isocyanatkomponente korrespondiert, aus der Aminphase.

In einer **siebzehnten Ausführungsform** der Erfindung, die eine besondere Ausgestaltung der sechzehnten Ausführungsform ist, wird die in Schritt (D.II.b) verdampfte Wasser-Alkohol-Fraktion (gegebenenfalls nach einer Aufreinigung) in Schritt (C.II) als Bestandteil der wässrigen Waschflüssigkeit zurückgeführt.

In einer **achtzehnten Ausführungsform** der Erfindung, die eine besondere Ausgestaltung der sechzehnten und siebzehnten Ausführungsform ist, wird die in Schritt (D.IVb) verdampfte Alkoholfraktion in Schritt (B) zurückgeführt.

In einer **neunzehnten Ausführungsform** der Erfindung, die eine besondere Ausgestaltung der dreizehnten bis achtzehnten Ausführungsform ist, umfassen diese Ausführungsformen den Schritt (D.I) der zwölften Ausführungsform.

In einer **zwanzigsten Ausführungsform** der Erfindung, die eine besondere Ausgestaltung der neunzehnten Ausführungsform ist, wird in Schritt (D.I) ein Massenverhältnis von erster wässriger Phase zu organischem Lösungsmittel im Bereich von 20 : 1 bis 1 : 3 eingehalten.

In einer **einundzwanzigsten Ausführungsform** der Erfindung, die eine besondere Ausgestaltung der neunzehnten und zwanzigsten Ausführungsform ist, wird die zweite Lösungsmittelphase in Schritt (C.II) gemeinsam mit dem zweiten Produktgemisch gewaschen.

In einer **zweiundzwanzigsten Ausführungsform** der Erfindung, die eine besondere Ausgestaltung der dreizehnten bis einundzwanzigsten Ausführungsform ist, umfasst das Verfahren den Schritt:
(E) Bereitstellen einer Rohproduktfraktion eines Amins, das das gleiche Amin ist, das in Schritt (D.V) gewonnen wird, wobei die Rohproduktfraktion neben diesem Amin (mindestens) höher als dieses Amin siedende organische Verunreinigungen enthält;
wobei Schritt (D.V) umfasst:
   (D.V.1) Vermischen der Aminphase mit der Rohproduktfraktion und Aufarbeiten der erhaltenen Mischung unter Erhalt des in der Rohproduktfraktion enthaltenen Amins gemeinsam mit dem aus der Aminphase gewonnenen Amin.

In einer **dreiundzwanzigsten Ausführungsform** der Erfindung, die eine besondere Ausgestaltung der zweiundzwanzigsten Ausführungsform ist, wird die Rohproduktfraktion einer Sumpffraktion einer Destillation zur Reinigung des in der Rohproduktfraktion enthaltenen Amins entnommen, wobei in Schritt (D.V.1) zusätzlich (d. h. neben dem in der Rohproduktfraktion enthaltenen Amin und dem aus der Aminphase gewonnenen Amin) ein fester Rückstand enthaltend die höher als dieses Amin siedenden organischen Verunreinigungen (und die aus dem Polyurethanprodukt stammenden Verunreinigungen) erhalten wird.

In einer **vierundzwanzigsten Ausführungsform** der Erfindung, die eine weitere besondere Ausgestaltung der zweiundzwanzigsten Ausführungsform ist, wird die Rohproduktfraktion einem Rohprodukt eines Verfahrens zur Herstellung des in der Rohproduktfraktion enthaltenen Amins entnommen und enthält leichter als dieses Amin siedende organische Verunreinigungen und Wasser und wird einer Destillation zur Abtrennung von Wasser zugeführt, in welcher eine Sumpffraktion enthaltend dieses Amin, leichter als dieses Amin siedende organische Verunreinigungen und höher als dieses Amin siedende organische Verunreinigungen (und die aus dem Polyurethanprodukt stammenden Verunreinigungen) sowie eine Kopffraktion enthaltend abgetrenntes Wasser (gegebenenfalls neben Restmengen leichter als dieses Amin siedender organischer Verunreinigungen) erhalten werden.

In einer **fünfundzwanzigsten Ausführungsform** der Erfindung, die eine besondere Ausgestaltung der dreiundzwanzigsten und vierundzwanzigsten Ausführungsform ist, umfasst Schritt (E):
(E.I) Katalytische Hydrierung der zu dem in der Rohproduktfraktion enthaltenen Amin korrespondierenden Nitroverbindung, gegebenenfalls in Gegenwart eines Lösungsmittels, unter Erhalt eines Rohprodukts enthaltend neben diesem Amin noch höher als dieses Amin siedende organische Verunreinigungen, leichter als dieses Amin siedende organische Verunreinigungen und Wasser;
(E.II) Abtrennen von Wasser aus dem Rohprodukt unter Erhalt eines an Wasser abgereicherten Verfahrensprodukts;
(E.III) Destillation des an Wasser abgereicherten Verfahrensprodukts unter Erhalt einer Destillatfraktion des in der Rohproduktfraktion enthaltenen (also des gewünschten) Amins und einer Sumpffraktion enthaltend neben diesem Amin höher als dieses Amin siedende organische Verunreinigungen.

In einer **sechsundzwanzigsten Ausführungsform** der Erfindung, die mit allen anderen Ausführungsformen kombiniert werden kann, enthält die Isocyanatkomponente ein Isocyanat ausgewählt aus der Gruppe bestehend aus Toluylendiisocyanat (TDI), den Di- und Polyisocyanaten der Diphenylmethanreihe (MDI), 1,5-Pentandiisocyanat (PDI), 1,6-Hexamethylendiisocyanat (HDI), Isophorondiisocyanat (IPDI), Xylylendiisocyanat (XDI) und Mischungen von zwei oder mehr der vorgenannten Isocyanate. Bevorzugt ist die Isocyanatkomponente eine Mischung aus TDI und MDI (d. h. enthält eine Mischung aus TDI und MDI ohne weitere Isocyanate). Besonders bevorzugt ist die Isocyanatkomponente TDI (d. h. enthält TDI und keine weiteren Isocyanate).

In einer **siebenundzwanzigsten Ausführungsform** der Erfindung, die mit allen anderen Ausführungsformen kombiniert werden kann, enthält die Polyolkomponente ein Polyol ausgewählt aus der Gruppe bestehend aus einem Polyetherpolyol, einem Polyesterpolyol, einem Polyetherester-Polyol, einem Polyethercarbonatpolyol und einer Mischung von zwei oder mehr der vorgenannten Polyole. Bevorzugt enthält die Polyolkomponente ein Polyetherpolyol. Besonders bevorzugt ist die Polyolkomponente ein Polyetherpolyol (d. h. enthält keine weiteren von Polyetherpolyolen verschiedenen Polyole; wobei jedoch eine Mischung von zwei oder mehr *unterschiedlichen* Polyetherpolyolen umfasst ist und den Rahmen dieser Ausführungsform nicht verlässt).

In einer **achtundzwanzigsten Ausführungsform** der Erfindung, die mit allen anderen Ausführungsformen kombiniert werden kann, wird
das organische Lösungsmittel in Schritt (C.I) ausgewählt aus der Gruppe bestehend aus Halogen-substituierten aliphatischen Kohlenwasserstoffen (wie insbesondere Tetrachlormethan, Chloroform und Hexachlorethan), Halogen-substituierten alicyclischen Kohlenwasserstoffen (wie insbesondere Chlorcyclohexan), Halogen-substituierten aromatischen Kohlenwasserstoffen (wie insbesondere Monochlorbenzol und Dichlorbenzol) und Mischungen von zwei oder mehr der vorgenannten organischen Lösungsmittel, und wird
der Alkohol in Schritt (B) ausgewählt aus der Gruppe bestehend aus Methanol, Ethanol, Ethylenglykol, Diethylenglykol, Propylenglykol, Dipropylenglykol, Methylglykol, Triethylenglykol, Glycerin, 2-Methyl-1,3-Propandiol und Mischungen von zwei oder mehr der vorgenannten Alkohole.

In einer **neunundzwanzigsten Ausführungsform** der Erfindung, die eine besondere Ausgestaltung der achtundzwanzigsten Ausführungsform ist, umfasst das organische Lösungsmittel Halogen-substituierte aromatische Kohlenwasserstoffe, und der Alkohol umfasst Ethylenglykol, Diethylenglykol, Propylenglykol, Dipropylenglykol, Methylglykol und/oder Triethylenglykol.

In einer **dreißigsten Ausführungsform** der Erfindung, die eine besondere Ausgestaltung der neunundzwanzigsten Ausführungsform ist, ist das organische Lösungsmittel Dichlorbenzol (insbesondere das ortho-Isomer), und der Alkohol ist Diethylenglykol.

In einer **einunddreißigsten Ausführungsform** der Erfindung, die mit allen anderen Ausführungsformen kombiniert werden kann, ist der Katalysator in Schritt (B) ausgewählt aus der Gruppe bestehend aus Alkalimetall-Hydroxiden, Erdalkalimetallhydroxiden, Alkalimetallsalzen von Carbonsäuren (insbesondere Acetaten), Erdalkalimetallsalzen von Carbonsäuren (insbesondere Acetaten), Lewis-Säuren (wie insbesondere Dibutylzinndilaurat), organischen Aminen (wie insbesondere Diethanolamin), organometallischen Verbindungen (wie insbesondere Titantetrabutanolat) und Zinnverbindungen (wie insbesondere Zinnoctoat).

In einer **zweiunddreißigsten Ausführungsform** der Erfindung, die eine besondere Ausgestaltung der dreizehnten bis einunddreißigsten Ausführungsformen ist, wird in Schritt (D.II.a) bzw. in Schritt (D.III.b) ein Katalysator eingesetzt, der ausgewählt ist aus der Gruppe bestehend aus Alkalimetall-Hydroxiden, Erdalkalimetallhydroxiden, Alkalimetallsalzen von Carbonsäuren (insbesondere Acetaten), Erdalkalimetallsalzen von Carbonsäuren (insbesondere Acetaten), Lewis-Säuren (wie insbesondere Dibutylzinndilaurat), organischen Aminen (wie insbesondere Diethanolamin), organometallischen Verbindungen (wie insbesondere Titantetrabutanolat) und Zinnverbindungen (wie insbesondere Zinnoctoat).

In einer **dreiunddreißigsten Ausführungsform** der Erfindung, die mit allen anderen Ausführungsformen außer solchen, die auf von Polyurethanschäumen verschiedene Polyurethanprodukte gerichtet sind, kombiniert werden kann, ist das Polyurethanprodukt ein Polyurethanschaum.

In einer **vierunddreißigsten Ausführungsform** der Erfindung, die eine besondere Ausgestaltung der dreiunddreißigsten Ausführungsform ist, ist der Polyurethanschaum ein Polyurethanweichschaum.

In einer **fünfunddreißigsten Ausführungsform** der Erfindung, die eine weitere besondere Ausgestaltung der dreiunddreißigsten Ausführungsform ist, ist der Polyurethanschaum ein Polyurethanhartschaum.

In einer **sechsunddreißigsten Ausführungsform** der Erfindung, die mit allen anderen Ausführungsformen außer solchen, die auf von Polyurethanelastomeren verschiedene Polyurethanprodukte gerichtet sind, kombiniert werden kann, ist das Polyurethanprodukt ein Polyurethanelastomer.

In einer **siebenunddreißigsten Ausführungsform** der Erfindung, die mit allen anderen Ausführungsformen außer solchen, die auf von Polyurethanklebstoffen verschiedene Polyurethanprodukte gerichtet sind, kombiniert werden kann, ist das Polyurethanprodukt ein Polyurethanklebstoff.

In einer **achtunddreißigsten Ausführungsform** der Erfindung, die mit allen anderen Ausführungsformen außer solchen, die auf von Polyurethanbeschichtungen verschiedene Polyurethanprodukte gerichtet sind, kombiniert werden kann, ist das Polyurethanprodukt eine Polyurethanbeschichtung.

In einer **neununddreißigsten Ausführungsform** der Erfindung, die mit allen anderen Ausführungsformen kombiniert werden kann, wird der Umsetzung von Schritt (B) Wasser allenfalls in einer solchen Menge zugeführt, dass der Massenanteil an Wasser, bezogen auf die Gesamtmasse aus in Schritt (B) vorhandenem (d. h. unmittelbar nach Vermischen der Reaktanden, also vor Beginn der Urethanspaltungsreaktionen, vorhandenem) Polyurethanprodukt, Katalysator, Alkohol und Wasser, in einem Bereich von 0 % bis 5,0 %, bevorzugt in einem Bereich von 0 % bis 3,0 %, besonders bevorzugt in einem Bereich von 0 % bis 2,0 %, ganz besonders bevorzugt in einem Bereich von 0 % bis 1,6 % liegt. Dabei wird nach Beginn der Umsetzung des Polyurethanprodukts mit dem (ein- oder mehrwertigen) Alkohol in Gegenwart des Katalysators kein weiteres Wasser zugegeben (= durch Polyurethanspaltungsreaktionen verbrauchtes Wasser wird nicht ersetzt).

Die zuvor kurz geschilderten Ausführungsformen und weitere mögliche Ausgestaltungen der Erfindung werden im Folgenden näher erläutert. Verschiedene Ausführungsformen sind, sofern sich aus dem Kontext für den Fachmann nicht eindeutig das Gegenteil ergibt, beliebig miteinander kombinierbar.

**FIG. 1** zeigt eine schematische Darstellung des erfindungsgemäßen Verfahrens in Form eines einfachen Blockfließbildes. Es bedeuten:
**1:** Polyurethanprodukt;
**2:** Alkohol;
**3:** erstes Produktgemisch;
**4:** organisches Lösungsmittel; **41:** erste Lösungsmittelphase;
**5:** zweites Produktgemisch;
**6** wässrige Waschflüssigkeit; **61:** erste wässrige Phase;
**7:** Polyol;
**8:** Amin;
**1000:** Schritt (A) [Bereitstellung des Polyurethanprodukts];
**2000:** Schritt (B) [Umsetzung des Polyurethanprodukts mit einem Alkohol];
**3000:** Schritt (C) [Aufarbeitung zur Polyol-Gewinnung]; **3100:** Schritt (C.I) [Wäsche]; **3200:** Schritt (C.II) [Wäsche inklusive Phasentrennung]; **3300:** Schritt (C.III) [weitere Aufarbeitung zum Polyol];
**4000:** Schritt (D) [Aufarbeitung zur Amin-Gewinnung];

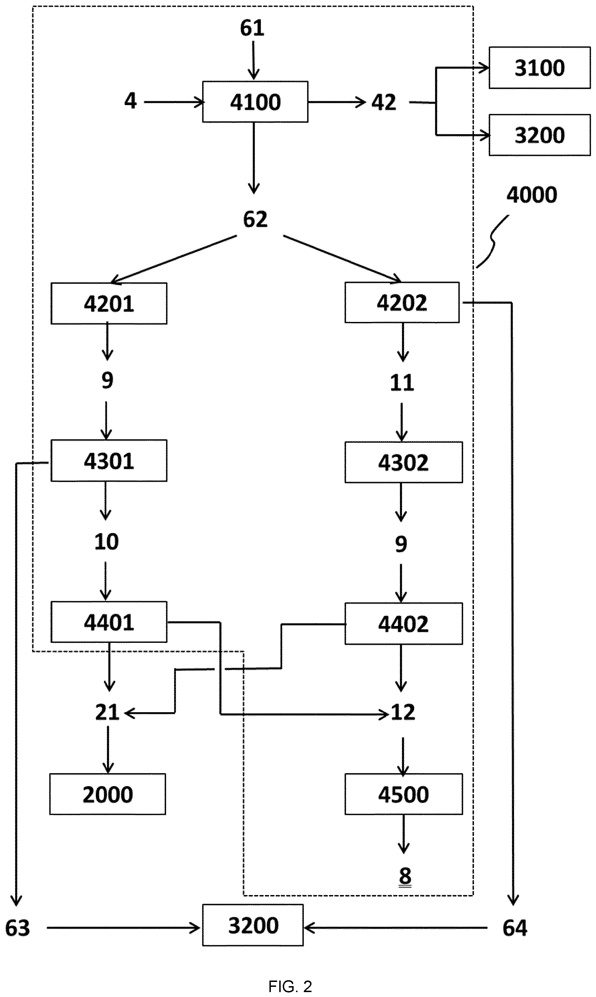

**FIG. 2** zeigt eine schematische Darstellung einer Ausführungsform des erfindungsgemäßen Verfahrens mit dem Schwerpunkt auf Schritt (D). Die verwendeten Bezugszeichen haben die gleiche Bedeutung wie bei FIG. 1. Zusätzlich bedeuten:
**9:** Drittes Produktgemisch;
**10:** Amin-Alkohol-Gemisch;
**11:** Carbamatphase;
**12:** Aminphase;
**42:** zweite Lösungsmittelphase;
**62:** zweite wässrige Phase; **63:** verdampftes Wasser, gegebenenfalls enthaltend Anteile von Lösungsmittel; **64:** Wasser-Alkohol-Fraktion;
**4100:** Schritt (D.I) [Vermengen mit Lösungsmittel inklusive Phasentrennung];
**4201:** Schritt (D.II.a) [Hydrolyse]; **4301:** Schritt (D.III.a) [Verdampfung]; **4401:** Schritt (D.IV.a) [Verdampfung];
**4202:** Schritt (D.II.b) [Verdampfung]; **4302:** Schritt (D.III.b) [Hydrolyse]; **4402:** Schritt (D.IV.b) [Verdampfung];
**4500:** Schritt (D.V) [Amin-Gewinnung].

### VORBEREITUNG DES CHEMISCHEN RECYCLINGS

In **Schritt (A)** des erfindungsgemäßen Verfahrens (= **1000** in den Abbildungen) wird das chemisch zu recycelnde Polyurethanprodukt **(1)** bereitgestellt.

Dabei kann es sich grundsätzlich um jede Art von Polyurethanprodukt handeln, d. h. sowohl um Polyurethanschäume als auch um Polyurethanprodukte aus den sog. CASE-Anwendungen. Bei den Polyurethanschäumen kommen sowohl Weichschäume als auch Hartschäume in Frage, wobei Weichschäume (beispielsweise aus alten Matratzen, Polstermöbeln oder Autositzen) bevorzugt sind. Bei Polyurethanprodukten aus den CASE-Anwendungen sind Polyurethanelastomere, Polyurethanklebstoffe und Polyurethanbeschichtungen bevorzugt.

Weiterhin sind solche Polyurethanprodukte bevorzugt, die hinsichtlich der Isocyanatkomponente auf einem Isocyanat ausgewählt aus der Gruppe bestehend aus Toluylendiisocyanat (TDI), den Di- und Polyisocyanaten der Diphenylmethanreihe (MDI), 1,5-Pentandiisocyanat (PDI), 1,6-Hexamethylendiisocyanat (HDI), Isophorondiisocyanat (IPDI) und Xylylendiisocyanat (XDI) und Mischungen von zwei oder mehr der vorgenannten Isocyanate basieren. Besonders bevorzugt sind Polyurethanprodukte, die hinsichtlich der Isocyanatkomponente auf einer Mischung aus TDI und MDI basieren. Ganz besonders bevorzugt sind Polyurethanprodukte, die hinsichtlich der Isocyanatkomponente nur auf TDI basieren.

Bevorzugt umfasst Schritt (A) vorbereitende Schritte für die Spaltung der Urethanbindungen in Schritt (B). Dabei handelt es sich insbesondere um ein mechanisches Zerkleinern der Polyurethanprodukte. Solche vorbereitenden Schritte sind dem Fachmann bekannt; es sei beispielsweise auf die in [1] zitierte Literatur verwiesen.

### CHEMISCHE SPALTUNG DER URETHANBINDUNGEN

**Schritt (B)** des erfindungsgemäßen Verfahrens (= **2000** in den Abbildungen) betrifft das eigentliche chemische Recycling, die Spaltung der Urethanbindungen. Schritt (B) wird bevorzugt als *Alkoholyse* (in der Literatur meist als *Glykolyse* bezeichnet; vgl. Nr. 2 weiter oben), insbesondere bei einer Temperatur im Bereich von 160 °C bis 240 °C, durchgeführt, also als Umsetzung mit einem Alkohol ohne die Zugabe signifikanter Anteile von Wasser, im Unterschied zu dem in der Literatur als *Hydro*glykolyse bezeichneten Prozess. *Ohne die Zugabe signifikanter Anteile von Wasser* bedeutet in diesem Zusammenhang, dass nicht bewusst Wasser in solchen Mengen zugegeben wird, die in signifikantem Umfang eine Hydroglykolyse (genauer: *Hydroalkoholyse)* bewirken würden. Der Eintrag geringer Mengen Wassers, die etwa in dem in Schritt (B) eingesetzten Alkohol gelöst enthalten sein, über das Polyurethanprodukt eingetragen werden oder als Lösungsmittel des Katalysators eingesetzt werden können, ist hierdurch nicht ausgeschlossen. Es ist ebenfalls denkbar, in Schritt (B) geringe Mengen an Wasser zuzugeben, um eventuell ausgefallene Salze in Lösung zu bringen. Hierbei kann es bevorzugt sein, dass zuzusetzende Wasser mit Kohlenstoffdioxid zu versetzen und insbesondere zu sättigen. Hierdurch wird das Auflösen basischer Salze erleichtert. Wasser wird über die zuvor genannten Quellen allenfalls in einer solchen Menge in Schritt (B) eingetragen, dass der Massenanteil an Wasser, bezogen auf die Gesamtmasse aus in Schritt (B) vorhandenem (d. h. unmittelbar nach Vermischen der Reaktanden, also vor Beginn der Urethanspaltungsreaktionen, vorhandenem) Polyurethanprodukt, Katalysator, Alkohol und Wasser (gleich welcher Herkunft), in einem Bereich von 0 % bis 5,0 %, bevorzugt in einem Bereich von 0 % bis 3,0 %, besonders bevorzugt in einem Bereich von 0 % bis 2,0 %, ganz besonders bevorzugt in einem Bereich von 0 % bis 1,6 %, liegt. Diese Anteile sind, insbesondere da im erfindungsgemäßen Verfahren Wasser, welches durch Urethanspaltungsreaktionen chemisch verbraucht wird, *nicht durch Zugabe weiteren Wassers während der Reaktion ersetzt wird,* erheblich geringer als üblicherweise für *Hydro*alkoholysen eingesetzt, sodass die in Schritt (B) ablaufende Umsetzung selbst bei anfänglichem Vorhandensein geringer Mengen Wassers schon sehr bald als "reine Alkoholyse" abläuft.

Die Zugabe von Wasser *zum Zwecke des Auflösens von Salzen* kann auch *nach* erfolgter Alkoholyse im erkalteten Zustand (insbesondere nach Abkühlen auf Umgebungstemperatur) erfolgen. In diesem Fall können die hierfür eingesetzten Massenanteile an Wasser auch höher sein als zuvor beschrieben und insbesondere bis zu 20 %, bezogen auf die Gesamtmasse der Reaktionsmischung vor dieser Wasserzugabe nach erfolgter Alkoholyse im erkalteten Zustand, betragen. Auch hier kann es bevorzugt sein, dass zuzusetzende Wasser mit Kohlenstoffdioxid zu versetzen und insbesondere zu sättigen, um das Auflösen basischer Salze zu erleichtern.

Diese Alkoholyse liefert ein **erstes Produktgemisch (3),** das Polyole, Carbamate und die nicht umgesetzten Anteile des eingesetzten Alkohols sowie gegebenenfalls Wasser enthält. Bei der Reaktion der Urethanbindungen eines wiederzuverwertenden Polyurethanprodukts mit dem in Schritt (B) eingesetzten Alkohol werden die in den Urethanbindungen gebundenen Polyole freigesetzt, und es wird ein neues Urethan mit dem eingesetzten Alkohol gebildet. Für dieses neue Urethan wird im Rahmen der vorliegenden Erfindung zur besseren Unterscheidung vom ursprünglichen Urethan der Begriff *Carbamat* verwendet. Bei mehrwertigen Alkoholen können prinzipiell alle Alkoholgruppen solche Carbamat-Bildungsreaktionen eingehen.

Es ist möglich, dass das erste Produktgemisch (3) bereits Amine enthält. Dies ist insbesondere dann der Fall, wenn das in Schritt (A) bereitgestellte Polyurethanprodukt in signifikanter Menge Harnstoffe enthält (entstanden beispielsweise durch eine wassergetriebene Verschäumung). Solche Harnstoffe reagieren dann mit dem in Schritt (B) eingesetzten Alkohol unter Freisetzung von Aminen.

Die Alkoholyse kann grundsätzlich durchgeführt werden wie im Stand der Technik an sich bekannt.

Als Alkohole für den Schritt (B) eignen sich insbesondere Methanol, Ethanol, Ethylenglykol, Diethylenglykol, Propylenglykol, Dipropylenglykol, Methylglykol, Triethylenglykol, Glycerin, 2-Methyl-1,3-Propandiol oder Mischungen von zwei oder mehr der vorgenannten Alkohole. Dabei sind Ethylenglykol, Diethylenglykol, Propylenglykol, Dipropylenglykol, Methylglykol, Triethylenglykol oder Mischungen von zwei oder mehr derselben besonders bevorzugt. Ganz besonders bevorzugt ist Diethylenglykol.

Als Katalysator für Schritt (B) eignen sich insbesondere Alkalimetall-Hydroxide, Erdalkalimetallhydroxide, Alkalimetallsalze von Carbonsäuren (insbesondere Acetate), Erdalkalimetallsalze von Carbonsäure (insbesondere Acetate), Lewis-Säuren (wie insbesondere Dibutylzinndilaurat), organischen Amine (wie insbesondere Diethanolamin), organometallische Verbindungen (wie insbesondere Titantetrabutanolat) und Zinnverbindungen (wie insbesondere Zinnoctoat). Schritt (B) wird bevorzugt bei Temperaturen im Bereich von 160 °C bis 270 °C in Gegenwart von 0,1 Massen-% bis 5 Massen-prozent Katalysator, bezogen auf die Masse des zugegebenen Polyurethanprodukts.

Das auf diese Weise erhaltene *erste Produktgemisch* kann einphasig sein (und ist es bevorzugt auch). Es ist ein großer Vorteil der vorliegenden Erfindung, dass die Aufarbeitung zur Isolierung der Produkte der chemischen Spaltung der Urethanbindungen, also mindestens der Polyole (vgl. *Schritt (C)*), bevorzugt der Polyole und Amine (vgl. *Schritt (D)),* nicht darauf basiert, bereits in Schritt (B) eine Vortrennung des Produktgemisches zu erzielen, wie das bei vielen Verfahren des Standes der Technik, die ein zweiphasiges Produkt anstreben (siehe [1] und die darin zitierte Literatur), der Fall ist. Hierdurch werden die Freiheitsgrade bei der Wahl des Alkohols deutlich erhöht. Eine Mehrphasigkeit des ersten Produktgemisches inklusive eines eventuellen Feststoffausfalls stört aber auch nicht und verlässt den Rahmen der Erfindung nicht.

### GEWINNUNG VON POLYOLEN

**Schritt (C)** des erfindungsgemäßen Verfahrens (= **3000** in den Abbildungen) umfasst die Gewinnung von Polyolen *aus dem in Schritt (B) erhaltenen ersten Produktgemisch,* d. h. eine Abtrennung von Wasser zwischen den Schritten (B) und (C) wie im sog. *"Ford-Hydroglykolyse-Prozess"* des Standes der Technik unterbleibt. Zu diesem Zweck wird in einem ersten Schritt (C.I) (= **3100** in den Abbildungen) das in Schritt (B) erhaltene erste Produktgemisch **(3)** mit einem organischen Lösungsmittel **(4),** das mit dem in Schritt (B) eingesetzten Alkohol **(2)** mischbar ist, vermischt.

Als organische Lösungsmittel für den Schritt (C.I) eignen sich insbesondere Halogen-substituierte aliphatische Kohlenwasserstoffe (wie insbesondere Tetrachlormethan, Chloroform und Hexachlorethan), Halogen-substituierte alicyclische Kohlenwasserstoffe (wie insbesondere Chlorcyclohexan), Halogen-substituierte aromatische Kohlenwasserstoffe (wie insbesondere Monochlorbenzol und Dichlorbenzol) oder Mischungen von zwei oder mehr der vorgenannten organischen Lösungsmittel. Aus der vorgenannten Aufzählung sind Halogen-substituierte aromatische Kohlenwasserstoffe besonders bevorzugt. Ganz besonders bevorzugt ist Dichlorbenzol (insbesondere das ortho-Isomer).

Der in Schritt (B) eingesetzte Alkohol und das in Schritt (C.I) eingesetzte organische Lösungsmittel sind in jedem Fall so zu wählen, dass beide unter den Bedingungen von Schritt (C.I) (Temperatur und Verhältnis von organischem Lösungsmittel zu Alkohol) mischbar sind. Bevorzugt werden in Schritt (C.I) das erste Produktgemisch und das organische Lösungsmittel in einem Massenverhältnis im Bereich von 5 : 1 bis 1 : 3 vermischt, und zwar bevorzugt bei einer Temperatur im Bereich von 30 °C bis 80 °C. Um die angestrebte Mischbarkeit zu erreichen, ist es besonders bevorzugt, als organisches Lösungsmittel einen Halogen-substituierten aromatischen Kohlenwasserstoff und als Alkohol Ethylenglykol, Diethylenglykol, Propylenglykol, Dipropylenglykol, Methylglykol und/oder Triethylenglykol einzusetzen. Insbesondere bewährt hat sich die Kombination von Dichlorbenzol (wobei das ortho-Isomer bevorzugt ist) und Diethylenglykol. Im Zweifelsfall lassen sich geeignete Kombinationen von Alkohol und Lösungsmittel durch einfache Vorversuche rasch ermitteln. Aufgrund der erfindungsgemäßen Kombination von miteinander mischbaren organischen Lösungsmitteln und Alkoholen liegt das in Schritt (C.I) erhaltene *zweite Produktgemisch **(5)*** in der Regel einphasig vor (was auch bevorzugt ist). Abhängig von der genauen Natur des in Schritt (A) bereitgestellten Polyurethanprodukts kann es jedoch nicht völlig ausgeschlossen werden, dass es im Einzelfall zur Ausbildung einer zweiten Phase (gegebenenfalls auch einer festen Phase, beispielsweise wenn das Polyurethanprodukt auf Styrol-Acrylnitril-Copolymer-Polyolen - auch Polymerpolyole [PMPO] genannt - basiert) kommt. Dies verlässt den Rahmen der Erfindung nicht.

In einem zweiten Schritt (C.II) (= **3200** in den Abbildungen) wird nun das in Schritt (C.I) erhaltene zweite Produktgemisch **(5)** mit einer wässrigen Waschflüssigkeit **(6)** ein- oder mehrstufig gewaschen. Dabei werden nach Phasentrennung eine *erste Lösungsmittelphase **(41)*** (umfassend neben Polyolen in Schritt (C.I) eingesetztes Lösungsmittel) und eine *erste wässrige Phase **(61)*** erhalten.

Schritt (C.II) kann mit dem Fachmann an sich bekannten Extraktionseinrichtungen wie insbesondere Mischern (rotierend, gepulst oder statisch) mit nachgeschalteten statischen Abscheidern mit und ohne Einbauten oder Zentrifugalabscheidern durchgeführt werden. Temperaturen von 20 °C bis 80 °C, bevorzugt höchstens 10 K unterhalb des Siedepunktes des eingesetzten Lösungsmittels, ggf. leichter Überdruck durch Überschleierung mit Stickstoff und Verhinderung der Gasbildung; Kreuzstromextraktion und insbesondere Gegenstromextraktion zur Reduktion der Gesamtwassermenge sind als Verfahrensbedingungen geeignet.

Die Wäsche kann einstufig erfolgen, wobei bevorzugt ein Massenverhältnis von zweitem Produktgemisch zu eingesetzter wässriger Waschflüssigkeit in einem Bereich von 20 : 1 bis 1 : 1 eingehalten wird.

Die Wäsche kann aber auch mehrstufig erfolgen, und zwar insbesondere zweistufig. Eine mehrstufige Wäsche in Schritt (C.II) kann nach dem Fachmann bekannten Prinzipien durchgeführt werden, beispielsweise als Kreuzstromextraktion (auch als Querstromextraktion bezeichnet) und/oder Gegenstromextraktion, insbesondere als Gegenstromextraktion. Bei mehrstufige Wäsche wird nach jeder Waschstufe eine Phasentrennung unter Erhalt einer Lösungsmittelphase und einer wässrigen Phase vorgenommen, wobei die in der letzten Waschstufe erhaltene Lösungsmittelphase die *erste Lösungsmittelphase **(41)*** ist und die *erste wässrige Phase (61)* (mindestens) die in der ersten Waschstufe erhaltene wässrige Phase umfasst (in einer bevorzugten Ausführungsform werden alle erhaltenen wässrigen Phasen zur ersten wässrigen Phase vereinigt). Dabei ist es besonders bevorzugt, in jeder Waschstufe ein Massenverhältnis
von
dem in einer Waschstufe zu waschendem zweitem Produktgemisch bzw. der zu waschenden Polyolphase
   zu
in einer Waschstufe eingesetzten wässrigen Waschflüssigkeit
im Bereich von 20 : 1 bis 1 : 1
einzuhalten.

Bei mehrstufiger Wäsche kann es vorteilhaft sein, die in der Phasentrennung nach der ersten Waschstufe erhaltene Lösungsmittelphase einer Verdampfung organischen Lösungsmittels zu unterziehen, und die auf diese Weise erhaltene, an organischem Lösungsmittel abgereicherte (aufkonzentrierte) ("Lösungsmittel-")Phase der zweiten Waschstufe zuzuführen. Das in der Verdampfung gewonnene organische Lösungsmittel kann vorteilhaft (gegebenenfalls nach einer Aufreinigung) in Schritt (C.I) zurückgeführt werden.

Die so erhaltene *erste Lösungsmittelphase (41)* wird in Schritt (C.III) (= **3300** in den Abbildungen) unter Gewinnung von Polyolen aufgearbeitet, was vorzugsweise mittels Destillation und/oder Strippung mit einem Strippgas (wie insbesondere Stickstoff oder Wasserdampf, bevorzugt Stickstoff) erfolgt. Dabei wird eine Destillation bevorzugt in einem Verdampfer ausgewählt aus der Gruppe bestehend aus Fallfilmverdampfern, Dünnschichtverdampfern, Flashverdampfern, Steigfilmverdampfern, Naturumlaufverdampfern, Zwangsumlaufverdampfern und Kesselverdampfern durchgeführt. Besonders bevorzugt ist es, der Destillation eine Strippung mit Wasserdampf nachzuschalten.

Eine Strippung mit Wasserdampf kann durch Durchleiten von Wasserdampf in dem Fachmann an sich bekannten Strippkolonnen durchgeführt werden. Die Strippung mit Wasserdampf kann jedoch auch so erfolgen, dass man Wasser in flüssiger Form der (gegebenenfalls bereits in einer Destillation vorgereinigten) ersten Polyolphase zugibt, anschließend überhitzt (unter Einhaltung eines mittels eines Druckventils eingestellten Gegendrucks, der ausreichend ist, das Wasser flüssig zu halten) und nach dem Druckventil entspannt, wodurch das im Polyol enthaltene Wasser verdampft und strippend wirkt.

### GEWINNUNG VON AMINEN

Bevorzugt umfasst die Erfindung auch den **Schritt (D),** die Gewinnung von Aminen (= **4000** in den Abbildungen; vgl. hierzu auch **FIG. 2****).**

Vorzugsweise wird zunächst in einem Schritt (D.I) (= **4100)** die erste wässrige Phase (61) mit einem organischen Lösungsmittel (insbesondere mit dem gleichen organischen Lösungsmittel, das in Schritt (C.I) eingesetzt wird; **4)** vermengt, woran sich eine Phasentrennung in eine **zweite Lösungsmittelphase (42)** enthaltend in Schritt (D.I) eingesetztes organisches Lösungsmittel und Polyole (d. h. einen zweiten Teil der Polyole aus dem ersten Produktgemisch, der kleiner ist als der erste Teil der Polyole; daher kann die zweite Lösungsmittelphase auch als *zweite Polyolphase* bezeichnet werden) und eine **zweite wässrige Phase (62)** enthaltend Alkohol, Carbamate und Amine (sowie aus dem Polyurethanprodukt stammende Verunreinigungen) anschließt. In Schritt (D.I) wird bevorzugt ein Massenverhältnis von erster wässriger Phase zu organischem Lösungsmittel im Bereich von 20 : 1 bis 1 : 3 eingehalten. Die bei Durchführung von Schritt (D.I) anfallende *zweite Lösungsmittelphase* wird bevorzugt in Schritt (C.II) geführt, mit dem zweiten Produktgemisch **(5)** vereinigt und mit diesem gemeinsam gewaschen. Zu diesem Zweck kann die zweite Lösungsmittelphase **(41)** (gemeinsam mit Lösungsmittel **(4))** dem Schritt (C.I) (= **3100)** oder direkt dem Schritt (C.II) (= **3200)** zugeführt werden. Beim Auftreten einer (semi-stabilen) Emulsion (d. h. aus technischer Sicht zu lange Trennzeit) in der Phasentrennung im Rahmen der Wäsche in Schritt (C.II) wird die erste wässrige Phase *enthaltend emulgierte Bestandteile (oder aus solchen bestehend)* dem Schritt (D.I) zugeführt, wo die Emulsion gebrochen wird und die zweite wässrige Phase und zweite Lösungsmittelphase anfallen. Sollte die Brechung der Emulsion nicht spontan bzw. zu langsam verlaufen, kann diese durch Zugabe von Alkohol (2) beschleunigt werden. Durch Rückführung der zweiten Lösungsmittelphase, die nun die ehemals in der ersten wässrigen Phase enthaltenen emulgierten organischen Bestandteile enthält, in den Schritt der Wäsche (C.II) wird verhindert, dass Anteile des Polyols infolge Emulgierens in der ersten wässrigen Phase der Polyol-Gewinnung in Schritt (C.III) entgehen.

Für die weitere Aufarbeitung der zweiten wässrigen Phase in einem Schritt D.II gibt es zwei besonders bevorzugte Möglichkeiten, die in FIG. 2 gezeigt sind:
In einer Variante a (in FIG. 2 auf der linken Seite dargestellt) umfasst Schritt (D.II) folgende Teilschritte:
(D.II.a) - **4201** - Hydrolysieren (insbesondere in Gegenwart eines Katalysators) der in der ersten wässrigen Phase oder, bei Durchführung von Schritt (D.I), in der zweiten wässrigen Phase, enthaltenen Carbamate [HYDROLYSE D.II.a] unter Erhalt eines **dritten Produktgemisches (9)** enthaltend Wasser, (in der Hydrolyse freigesetzten und bereits vorher in der ersten bzw. zweiten wässrigen Phase enthaltenen) Alkohol und (in der Hydrolyse freigesetzte und bereits vorher in der ersten bzw. zweiten wässrigen Phase enthaltene) Amine (sowie aus dem Polyurethanprodukt stammende Verunreinigungen);
(D.III.a) - **4301** - Verdampfen von Wasser **(63)** (gegebenenfalls - insbesondere bei Durchführung von Schritt (D.I) - gemeinsam mit Restbestandteilen an organischem Lösungsmittel) aus dem dritten Produktgemisch unter Verbleib eines **Amin-Alkohol-Gemisches (10)** (enthaltend aus dem Polyurethanprodukt stammende Verunreinigungen);
(D.IV.a) - **4401** - Verdampfen einer Alkoholfraktion **(21)** aus dem Amin-Alkohol-Gemisch (10) (enthaltend aus dem Polyurethanprodukt stammende Verunreinigungen).

Das in Schritt (D.III.a) verdampfte Wasser **(63),** das, wie zuvor geschildert, in bestimmten Ausführungsformen im Gemisch mit Lösungsmittel vorliegen kann, kann vorteilhafterweise (gegebenenfalls nach einer Aufreinigung) in Schritt (C.II) zurückgeführt und dort als Bestandteil der wässrigen Waschflüssigkeit **(6)** eingesetzt werden. Die in Schritt (D.IV.a) verdampfte Alkoholfraktion **(21)** kann vorteilhaft in Schritt (B) zurückgeführt und dort als Bestandteil des einzusetzenden Alkohols **(2)** verwendet werden.

In einer Variante b (in FIG. 2 auf der rechten Seite dargestellt) umfasst Schritt (D.II) folgende Teilschritte:
(D.II.b) - **4202** - Verdampfen einer Wasser-Alkohol-Fraktion **(64)** aus der ersten wässrigen Phase **(61),** oder, bei Durchführung von Schritt (D.I), aus der zweiten wässrigen Phase **(62),** unter Verbleib einer **Carbamatphase (11)** (enthaltend aus dem Polyurethanprodukt stammende Verunreinigungen);
(D.III.b) - **4302** - Hydrolysieren (insbesondere in Gegenwart eines Katalysators) der in der Carbamatphase enthaltenen Carbamate unter Erhalt eines **dritten Produktgemisches (9)** enthaltend Wasser, (in der Hydrolyse freigesetzten und bereits vorher in der ersten bzw. zweiten wässrigen Phase enthaltenen) Alkohol und (in der Hydrolyse freigesetzte und bereits vorher in der ersten bzw. zweiten wässrigen Phase enthaltene) Amine (sowie aus dem Polyurethanprodukt stammende Verunreinigungen);
(D.IV.b) - **4402** - Verdampfen einer Alkoholfraktion **(21)** aus dem dritten Produktgemisch **(9)** unter Erhalt einer **Aminphase (12)** (enthaltend aus dem Polyurethanprodukt stammende Verunreinigungen);

In dieser Variante wird in Schritt (D.II.b) durch Verdampfung eine Wasser-Alkohol-Fraktion **(64)** erhalten, die in bevorzugter Ausgestaltung (gegebenenfalls nach einer Aufreinigung) in Schritt (C.II) als Bestandteil der wässrigen Waschflüssigkeit **(6)** zurückgeführt werden kann. Die in Schritt (D.IVb) verdampfte Alkoholfraktion **(21)** wird bevorzugt in Schritt (B) zurückgeführt.

In beiden Varianten wird im Hydrolyseschritt (= Schritt (D.II.a) bzw. Schritt (D.III.b)) bevorzugt ein Katalysator eingesetzt. Hierzu eignen sich insbesondere Alkalimetall-Hydroxide, Erdalkalimetallhydroxide, Alkalimetallsalze von Carbonsäuren (insbesondere Acetaten), Erdalkalimetallsalze von Carbonsäuren (insbesondere Acetaten), Lewis-Säuren (wie insbesondere Dibutylzinndilaurat), organische Amine (wie insbesondere Diethanolamin), organometallische Verbindungen (wie insbesondere Titantetrabutanolat) und Zinnverbindungen (wie insbesondere Zinnoctoat). In der Variante b kann es, abhängig davon, wie viel Wasser in Schritt (D.Il.b) gemeinsam mit dem Alkohol verdampft wurde, sinnvoll sein, wieder (etwas) Wasser zuzugeben.

Der wesentliche Unterschied zwischen beiden Varianten ist demnach die unterschiedliche Reihenfolge der Schritte der Hydrolyse und der Verdampfung. Beide Varianten umfassen einen Schritt (D.V), *das Gewinnen des Amins aus der Aminphase.*

In einer besonders vorteilhaften Ausführungsform der Erfindung, die einen wirtschaftlichen und umweltschonenden Auslass für aus dem Polyurethanprodukt stammende Verunreinigungen bietet, wird die Gewinnung des Amins aus dieser Aminphase in die Aufarbeitung neu hergestellten Amins eingebunden, *indem die Aminphase **(12)** einer Rohproduktfraktion des herzustellenden Amins beigemischt wird.*
(1) Diese besonders vorteilhafte Ausführungsform des erfindungsgemäßen Verfahrens ist insbesondere dann anwendbar, wenn die Isocyanatkomponente des Polyurethanprodukts auf genau einer Isocyanatklasse basiert. In einem solchen Fall enthält die im erfindungsgemäßen Verfahren aus dem Polyurethanprodukt gewonnene Aminphase **(12)** nur die zu den Isocyanaten der Isocyanatklasse korrespondierenden Amine (und keine anderen) und kann daher problemlos mit einer Rohproduktfraktion, die in einem Prozess zur Herstellung (d. h. zur Neuherstellung, zu unterscheiden von der Rückgewinnung durch Recycling) des gleichen Amins (der gleichen Aminklasse) anfällt, beigemischt werden.
(2) In dem Fall, dass die Isocyanatkomponente des Polyurethanprodukts auf Isocyanaten unterschiedlicher Isocyanatklassen basiert, ist die genannte besonders vorteilhafte Ausführungsform des erfindungsgemäßen Verfahrens insbesondere dann anwendbar, wenn sich die zu den Isocyanatklassen korrespondierenden Aminklassen in ihren Siedepunkten derart unterscheiden, dass (genau) eine Aminklasse deutlich niedriger siedet (d. h. um mindestens 20 °C niedriger) als die am niedrigsten siedende sonst noch vorhandene Aminklasse. In einem solchen Fall kann diese Ausführungsform dazu verwendet werden, die am leichtesten siedende Aminklasse im Rahmen der Aufarbeitung neu hergestellten Amins der gleichen Aminklasse wiederzugewinnen, wobei Amine von höher siedenden Aminklassen in der Aufarbeitung abgetrennt werden, indem diese in Sumpffraktionen bzw. in Rückstände (siehe weiter unten für Details) überführt werden. So kann beispielsweise im Fall eines Polyurethanprodukts, das bezüglich seiner Isocyanatkomponente auf einer Mischung aus TDI und MDI basiert, die Aminphase in die Aufarbeitung einer TDA-Rohproduktfraktion eingebunden werden, indem die Aminphase mit einer solchen TDA-Rohproduktfraktion vermischt und zusammen mit dieser aufgearbeitet wird. In dieser Aufarbeitung werden das neu hergestellte TDA und das TDA, welches ursprünglich aus dem Polyurethanprodukt stammt, gemeinsam gewonnen, während das MDA aus dem Polyurethanprodukt in der destilllativen Reinigung als Sumpffraktion abgetrennt wird. Aus dieser Sumpffraktion kann es entweder in einem weiteren Destillationsschritt gewonnen werden (zumindest die Diamine der Diphenylmethanreihe), oder man verzichtet auf die (stoffliche) Wiedergewinnung des MDA und lässt dieses in den festen Rückstand der TDA-Herstellung gelangen (siehe unten für Details).

Die folgende **Detailbeschreibung** orientiert sich sprachlich der Einfachheit halber an Fall (1), ist jedoch auch auf Fall (2) anwendbar.

In der Herstellung von Aminen, die für die Polyurethansynthese bedeutsam sind, fallen, beispielsweise als Sumpffraktion einer Destillation zur Reinigung des angestrebten Amins oder auch als Rohprodukt der Herstellung selbst (gegebenenfalls nach Abtrennung von Lösungsmittel), regelmäßig Rohproduktfraktionen an, die neben dem gewünschten Amin noch Verunreinigungen bzw. Koppelprodukte (wie zum Beispiel höher als das Amin siedende organische Verunreinigungen (sog. Hochsieder), leichter als das Amin siedende organische Verunreinigungen (sog. Leichtsieder) und/oder (Reaktions-)Wasser) enthalten.

In dieser Ausführungsform der Erfindung umfasst das erfindungsgemäße Verfahren daher einen Schritt (E), nämlich
(E) Bereitstellen einer Rohproduktfraktion eines Amins, das das gleiche Amin ist, das in Schritt (D.V) gewonnen wird, wobei die Rohproduktfraktion neben diesem Amin (mindestens) höher als dieses Amin siedende organische Verunreinigungen enthält;
wobei Schritt (D.V) umfasst:
(D.V.1) Vermischen der Aminphase mit der Rohproduktfraktion und Aufarbeiten der erhaltenen Mischung unter Erhalt des in der Rohproduktfraktion enthaltenen Amins gemeinsam mit dem aus der Aminphase gewonnenen Amin.

In einer ersten bevorzugten Ausgestaltung des Schrittes (D.V.1) wird die Rohproduktfraktion einer Sumpffraktion einer Destillation zur Reinigung des in der Rohproduktfraktion enthaltenen Amins entnommen, wobei in Schritt (D.V.1) zusätzlich (d. h. neben dem in der Rohproduktfraktion enthaltenen Amin und dem aus der Aminphase gewonnenen Amin) ein fester Rückstand enthaltend die höher als das Amin siedenden organischen Verunreinigungen (und die aus dem Polyurethanprodukt stammenden Verunreinigungen) erhalten wird.

Unabhängig von der genauen Ausgestaltung des Schrittes (D.V.1) ist es bevorzugt, dass Schritt (E) Folgendes umfasst:
(E.I) Katalytische Hydrierung der zu dem in der Rohproduktfraktion enthaltenen Amin korrespondierenden Nitroverbindung, gegebenenfalls in Gegenwart eines Lösungsmittels, unter Erhalt eines Rohprodukts enthaltend neben diesem Amin noch höher als dieses Amin siedende organische Verunreinigungen, leichter als dieses Amin siedende organische Verunreinigungen und Wasser;
(E.II) Abtrennen von Wasser aus dem Rohprodukt unter Erhalt eines an Wasser abgereicherten Verfahrensprodukts;
(E.III) Destillation des an Wasser abgereicherten Verfahrensprodukts unter Erhalt einer Destillatfraktion des in der Rohproduktfraktion enthaltenen (also des gewünschten) Amins und einer Sumpffraktion enthaltend neben diesem Amin höher als dieses Amin siedende organische Verunreinigungen.

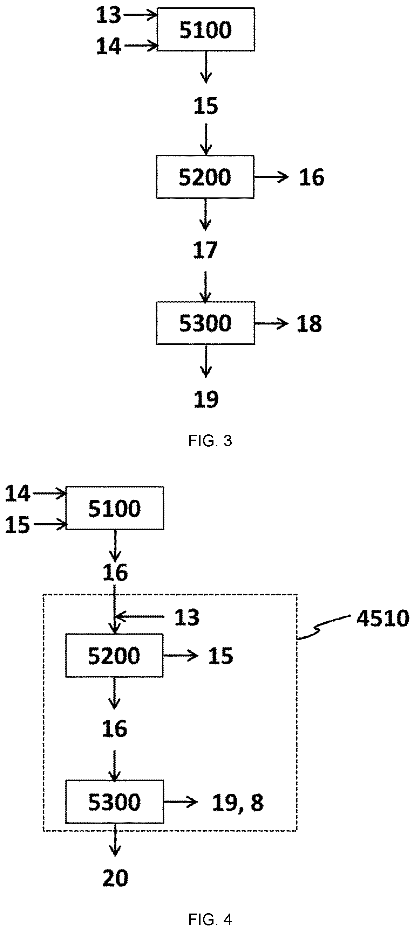

Die Schritte (E.I) bis (E.III) sind in **FIG. 3** schematisch dargestellt. Es bedeuten:
**13:** Zur Hydrierung eingesetzter Wasserstoff;
**14:** zu dem Amin korrespondierende Nitroverbindung;
**15:** Rohprodukt der Hydrierung;
**16:** abgetrenntes Wasser;
**17:** an Wasser abgereichertes Verfahrensprodukt;
**18:** Destillatfraktion des in der Hydrierung gebildeten Amins;
**19:** Sumpffraktion der Destillation;
**5100:** Hydrierung (Schritt (E.I)); **5200:** Wasserabtrennung (Schritt (E.II); **5300:** Destillation (Schritt (E.III)).

In einer Ausführungsform der Erfindung wird die Aminphase **(12)** mit dem in Schritt (E.I) erhaltenen *Rohprodukt der Hydrierung **(15)*** (das lediglich von gegebenenfalls vorhandenem Lösungsmittel befreit wurde), vermischt d. h. die Rohproduktfration aus Schritt (E) wird als Rohprodukt der Hydrierung (*Schritt E.I*) *=* ***5100*)** erhalten. Das aus dem Polyurethanprodukt stammende Amin **(8)** wird hier gemeinsam mit dem aus der (Neu-)Herstellung stammenden Amin **(18)** abdestilliert. Dies ist in **FIG. 4** gezeigt, worin bereits verwendete Bezugszeichen die gleiche Bedeutung haben wie zuvor und **4510** für den Schritt (D.V.1) steht.

In dieser Ausführungsform wird die Aminphase **(12)** dem Rohprodukt der Hydrierung aus Schritt (E.I) insbesondere vor oder im Schritt der Wasserabtrennung (*Schritt E.II*)) beigemischt, wobei die Wasserabtrennung bevorzugt destillativ erfolgt, beispielsweise wie in EP 0 236 839 A2 beschrieben. In dieser Ausführungsform enthält also die Rohproduktfraktion des zu dem Isocyanat korrespondierenden Amins neben dem Amin zusätzlich noch leichter als das Amin siedende organische Verunreinigungen sowie Wasser und wird einer Destillation zur Abtrennung von Wasser zugeführt. In dieser Destillation werden eine Sumpffraktion enthaltend das Amin, leichter als das Amin siedende organische Verunreinigungen und höher als das Amin siedende organische Verunreinigungen (und die aus dem Polyurethanprodukt stammenden Verunreinigungen) sowie eine Kopffraktion enthaltend abgetrenntes Wasser (gegebenenfalls neben Restmengen leichter als das Amin siedender organischer Verunreinigungen) erhalten. Die aus dem Polyurethanprodukt stammenden Verunreinigungen gelangen im Schritt der Wasserabtrennung - Schritt (E.II) - in die Sumpffraktion. Im Folgeschritt der Amindestillation - Schritt (E.III) - gelangen sie ebenfalls in die Sumpffraktion.

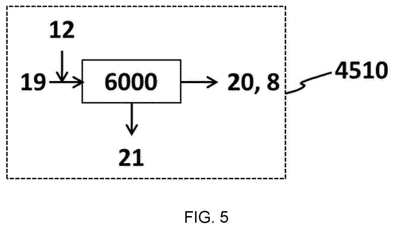

In einer weiteren Ausführungsform der Erfindung wird die Aminphase **(12)** der in Schritt (E.III) erhaltenen Sumpffraktion **(19)** beigemischt, d. h. die Rohproduktfration aus Schritt (E) wird als Sumpffraktion der Amindestillation (*Schritt E.III) =* ***5300*)** erhalten. Beispiele für solche als Sumpffraktionen der Amindestillation erhaltene Rohproduktfraktionen sind die Ströme 5, 50 bzw. 51 der Abbildungen FIG. 1 bis 3 der internationalen Patentanmeldung WO 02/48075 A1, wobei die weitere Aufarbeitung dieser Ströme so erfolgen kann, wie in der Schrift geschildert oder aber auch abweichend davon in Trockenapparaten wie nachfolgend geschildert. Ein weiteres Beispiel für solche Rohproduktfraktionen ist der Strom P4 der Abbildungen FIG. 1 bis FIG. 5 der US-Patentschrift US 7,307,190 B2. Derartige Sumpffraktion werden im Stand der Technik aufgearbeitet, um darin enthaltenes Amin zurückzugewinnen. Hierzu wird die Sumpffraktion in Trocknungsapparaten zu einem festen Rückstand aufkonzentriert, wobei Amin abdestilliert und so zurückgewonnen werden kann. In der genannten Ausführungsform des erfindungsgemäßen Verfahrens wird nun durch Vermischung der Aminphase **(12)** mit der Sumpffraktion **(19)** die Zurückgewinnung von *Amin, das aus der (Neu-)Herstellung des Amins stammt **(20)*** mit der Gewinnung des *Amins, das aus dem Polyurethanprodukt stammt **(8)*** verbunden. Dabei wird also neben dem Amin **(20, 8)** ein fester Rückstand **(21)** enthaltend die in der Rohproduktfraktion vorhandenen Hochsieder *und die aus dem Polyurethanprodukt stammenden Verunreinigungen* erhalten. Dies ist in **FIG. 5** gezeigt, worin bereits verwendete Bezugszeichen die gleiche Bedeutung haben wie zuvor und **6000** für die Rückstandsaufarbeitung steht. Für eine solche Aufarbeitung geeignete Apparate sind dem Fachmann bekannt und beispielsweise in den Patentanmeldungen DE 10 2012 108 261 AI (Knetertrockner, auch in US 3,307,190 B2 zur Aufarbeitung des Stroms P4 erwähnt), EP 2 540 702 A2 (Wirbelbett-Trockner) und WO 2018/114846 A1 (verschiedene Trocknertypen) beschrieben. (In den genannten DE-, EP- und WO-Schriften wird die Aufarbeitung von TDI-Rückständen beschrieben; die Apparate sind aber auch für die Aufarbeitung von TDA-Rückständen einsetzbar.) Die in einem solchen Aufarbeitungsprozess erhaltenen festen Rückstände können wie bisher weiter verarbeitet werden; sie können z. B. verbrannt, vergast (also im Gegensatz zur Verbrennung unter *Sauerstoffunterschuss* erhitzt) oder pyrolysiert werden.

Mit der zuvor geschilderten besonders vorteilhaften Ausführungsform der Erfindung gelingt es also, Verunreinigungen aus dem Polyurethanprodukt *in einen ohnehin anfallenden* Rückstand zu überführen, sodass zusätzliche Abfallströme vermindert oder vermieden werden.

Die Erfindung wird im Folgenden noch mit Hilfe von Beispielen weiter erläutert.

### Beispiel:

Ein TDI-basierter Polyurethanschaum wurde einer Alkoholyse mit Diethylenglykol (DEG) im Massenverhältnis 1 : 1 unterzogen **(Schritte (A) und (B)** des erfindungsgemäßen Verfahrens). Das so erhaltene erste Produktgemisch wies laut Analytik gemäß H-NMR/2D-NMR-Spektroskopie mit internem Standard folgende Zusammensetzung auf (Massenanteile bezogen auf die Gesamtmasse des ersten Produktgemisches):
38 % Polyol, 42 % DEG und in Summe 20 % TDA und Carbamate.

60 g dieses ersten Produktgemisches wurden in eine Probeflasche gefüllt und 40 g ortho-Dichlorbenzol (ODB) hinzugegeben. Die Flasche wurde verschlossen und 5 min mit der Hand geschüttelt **(Schritt (C.I)** des erfindungsgemäßen Verfahrens). Das so erhaltene zweite Produktgemisch war einphasig. Anschließend wurde das einphasige zweite Produktgemisch in eine neue Probeflasche überführt. Nach Zugabe von 100 g vollentsalztem (VE-)Wasser wurde die Probeflasche verschlossen und 5 min von Hand geschüttelt. Es entstand ein zweiphasiges Gemisch. Die untere, schwere Phase von 69 g (eine Lösungsmittelphase) enthielt primär Polyol und ODB, die obere, leichte Phase (= erste wässrige Phase) von 131 g enthielt primär DEG, Wasser, Amine und Carbamatverbindungen. Beide Phasen wurden im Scheidetrichter voneinander getrennt **(Schritt (C.II)** des erfindungsgemäßen Verfahrens, *erste Waschstufe).*

Von der unteren Phase (enthaltend Polyol und ODB) wurden 37 g in eine Probeflasche überführt und mit 37 g VE-Wasser versetzt. Die Probeflasche wurde verschlossen und 5 min von Hand geschüttelt. Die obere, leichte Phase (erste Lösungsmittelphase) und die untere, schwere Phase (wässrige Phase der zweiten Stufe) wurden voneinander getrennt **(Schritt (C.II)** des erfindungsgemäßen Verfahrens, *zweite Waschstufe*)*.*

Die folgenden Zusammensetzungen wurden mittels Analytik gemäß H-NMR/2D-NMR mit internem Standard ermittelt (Massenanteile bezogen auf die Gesamtmasse der jeweiligen Phase):
Erste Lösungsmittelphase:
   24 % Polyol, 74 % ODB, 0,5 % DEG, Rest TDA und Carbamate.
Erste wässrige Phase:
   20 % DEG, ca. 75 % Wasser, 0,6 % ODB, < 0,1 % Polyol, Rest TDA und Carbamate.

Die Zusammensetzung der ersten Lösungsmittelphase erlaubt eine leichte Isolierung des Polyols, beispielsweise durch Destillation **(Schritt (C.III)** des erfindungsgemäßen Verfahrens).

## Patentansprüche

1. Verfahren zur Wiedergewinnung von Rohstoffen aus Polyurethanprodukten, umfassend die Schritte:
(A) Bereitstellen eines auf einer Isocyanatkomponente und einer Polyolkomponente basierenden Polyurethanprodukts;
(B) Umsetzen des Polyurethanprodukts mit einem Alkohol in Gegenwart eines Katalysators, wobei ein erstes Produktgemisch enthaltend Alkohol, Polyole und Carbamate sowie gegebenenfalls Wasser erhalten wird;
(C) Aufarbeiten des ersten Produktgemisches, umfassend:
(C.I) Vermischen des in Schritt (B) erhaltenen ersten Produktgemisches mit einem organischen Lösungsmittel, wobei der in Schritt (B) eingesetzte Alkohol und das in Schritt (C.I) eingesetzte organische Lösungsmittel so gewählt werden, dass beide unter den Bedingungen von Schritt (C.I), nämlich bei der Temperatur und dem Verhältnis von organischem Lösungsmittel zu Alkohol, mischbar sind, optional gefolgt von einer Abtrennung fester Bestandteile, unter Erhalt eines zweiten Produktgemisches;
(C.II) Waschen des in Schritt (C.I) erhaltenen zweiten Produktgemisches mit einer wässrigen Waschflüssigkeit, wobei im zweiten Produktgemisch enthaltene Carbamate teilweise unter Freisetzung von Aminen und Alkohol hydrolysiert werden, und Phasentrennung in
eine erste Lösungsmittelphase enthaltend in Schritt (C.I) eingesetztes organisches Lösungsmittel und Polyole, und
eine erste wässrige Phase, enthaltend Wasser, Alkohol, Carbamate und Amine;
(C.III) Aufarbeiten der ersten Lösungsmittelphase unter Gewinnung der Polyole;
und optional
(D) Aufarbeiten der ersten wässrigen Phase unter Gewinnung eines Amins, das zu einem Isocyanat der Isocyanatkomponente korrespondiert.

2. Verfahren nach Anspruch 1, bei welchem Schritt (D) durchgeführt wird und Folgendes umfasst:
(D.I) Vermengen der ersten wässrigen Phase mit einem organischen Lösungsmittel und Phasentrennung in
eine zweite Lösungsmittelphase enthaltend in Schritt (D.I) eingesetztes organisches Lösungsmittel und Polyole und
eine zweite wässrige Phase enthaltend Alkohol, Carbamate und Amine.

3. Verfahren nach Anspruch 1 oder 2, bei welchem Schritt (D) umfasst:
(D.II.a) Hydrolysieren der in der ersten wässrigen Phase oder, bei Durchführung von Schritt (D.I), in der zweiten wässrigen Phase, enthaltenen Carbamate unter Erhalt eines dritten Produktgemisches enthaltend Wasser, Alkohol und Amine;
(D.III.a) Verdampfen von Wasser aus dem dritten Produktgemisch unter Verbleib eines Amin-Alkohol-Gemisches;
(D.IV.a) Verdampfen einer Alkoholfraktion aus dem Amin-Alkohol-Gemisch unter Verbleib einer Aminphase;
(D.V) Gewinnen eines Amins, das zu einem Isocyanat der Isocyanatkomponente korrespondiert, aus der Aminphase.

4. Verfahren nach Anspruch 3, bei welchem das in Schritt (D.III.a) verdampfte Wasser in Schritt (C.II) als Bestandteil der wässrigen Waschflüssigkeit zurückgeführt wird.

5. Verfahren nach Anspruch 3 oder 4, bei welchem die in Schritt (D.IV.a) verdampfte Alkoholfraktion in Schritt (B) zurückgeführt wird.

6. Verfahren nach Anspruch 1 oder 2, bei welchem Schritt (D) umfasst:
(D.II.b) Verdampfen einer Wasser-Alkohol-Fraktion aus der ersten wässrigen Phase, oder, bei Durchführung von Schritt (D.I), aus der zweiten wässrigen Phase, unter Verbleib einer Carbamatphase;
(D.III.b) Hydrolysieren der in der Carbamatphase enthaltenen Carbamate unter Erhalt eines dritten Produktgemisches enthaltend Wasser, Alkohol und Amine;
(D.IV.b) Verdampfen einer Alkoholfraktion aus dem dritten Produktgemisch unter Erhalt einer Aminphase;
(D.V) Gewinnen eines Amins, das zu einem Isocyanat der Isocyanatkomponente korrespondiert, aus der Aminphase.

7. Verfahren nach Anspruch 6, bei welchem die in Schritt (D.II.b) verdampfte Wasser-Alkohol-Fraktion in Schritt (C.II) als Bestandteil der wässrigen Waschflüssigkeit zurückgeführt wird.

8. Verfahren nach einem der Ansprüche 6 oder 7, bei welchem die in Schritt (D.IVb) verdampfte Alkoholfraktion in Schritt (B) zurückgeführt wird.

9. Verfahren nach einem der Ansprüche 3 bis 8, weiterhin umfassend den Schritt
(E) Bereitstellen einer Rohproduktfraktion eines Amins, das das gleiche Amin ist, das in Schritt (D.V) gewonnen wird, wobei die Rohproduktfraktion neben diesem Amin höher als dieses Amin siedende organische Verunreinigungen enthält;
wobei Schritt (D.V) umfasst:
(D.V.1) Vermischen der Aminphase mit der Rohproduktfraktion und Aufarbeiten der erhaltenen Mischung unter Erhalt des in der Rohproduktfraktion enthaltenen Amins gemeinsam mit dem aus der Aminphase gewonnenen Amin.

10. Verfahren nach Anspruch 9,
bei welchem die Rohproduktfraktion einer Sumpffraktion einer Destillation zur Reinigung des in der Rohproduktfraktion enthaltenen Amins entnommen wird, wobei in Schritt (D.V.1) zusätzlich ein fester Rückstand enthaltend die höher als dieses Amin siedenden organischen Verunreinigungen erhalten wird;
oder
bei welchem die Rohproduktfraktion einem Rohprodukt eines Verfahrens zur Herstellung des in der Rohproduktfraktion enthaltenen Amins entnommen wird und leichter als dieses Amin siedende organische Verunreinigungen und Wasser enthält und einer Destillation zur Abtrennung von Wasser zugeführt wird, in welcher eine Sumpffraktion enthaltend dieses Amin, leichter als dieses Amin siedende organische Verunreinigungen und höher als dieses Amin siedende organische Verunreinigungen sowie eine Kopffraktion enthaltend abgetrenntes Wasser erhalten werden.

11. Verfahren nach Anspruch 10, bei welchem Schritt (E) umfasst:
(E.I) Katalytische Hydrierung der zu dem in der Rohproduktfraktion enthaltenen Amin korrespondierenden Nitroverbindung, gegebenenfalls in Gegenwart eines Lösungsmittels, unter Erhalt eines Rohprodukts enthaltend neben diesem Amin noch höher als dieses Amin siedende organische Verunreinigungen, leichter als dieses Amin siedende organische Verunreinigungen und Wasser;
(E.II) Abtrennen von Wasser aus dem Rohprodukt unter Erhalt eines an Wasser abgereicherten Verfahrensprodukts;
(E.III) Destillation des an Wasser abgereicherten Verfahrensprodukts unter Erhalt einer Destillatfraktion des in der Rohproduktfraktion enthaltenen Amins und einer Sumpffraktion enthaltend neben diesem Amin höher als dieses Amin siedende organische Verunreinigungen.

12. Verfahren nach einem der vorstehenden Ansprüche,
bei welchem die Isocyanatkomponente ein Isocyanat ausgewählt aus der Gruppe bestehend aus Toluylendiisocyanat, den Di- und Polyisocyanaten der Diphenylmethanreihe, 1,5-Pentandiisocyanat, 1,6-Hexamethylendiisocyanat, Isophorondiisocyanat, Xylylendiisocyanat und Mischungen von zwei oder mehr der vorgenannten Isocyanate enthält,
und/oder bei welchem
die Polyolkomponente ein Polyol ausgewählt aus der Gruppe bestehend aus einem Polyetherpolyol, einem Polyesterpolyol, einem Polyetherester-Polyol, einem Polyethercarbonatpolyol und einer Mischung von zwei oder mehr der vorgenannten Polyole enthält.

13. Verfahren nach einem der vorstehenden Ansprüche, bei welchem
das organische Lösungsmittel in Schritt (C.I) ausgewählt wird aus der Gruppe bestehend aus Halogen-substituierten aliphatischen Kohlenwasserstoffen, Halogen-substituierten alicyclischen Kohlenwasserstoffen, Halogen-substituierten aromatischen Kohlenwasserstoffen und Mischungen von zwei oder mehr der vorgenannten organischen Lösungsmittel, und
der Alkohol in Schritt (B) ausgewählt wird aus der Gruppe bestehend aus Methanol, Ethanol, Ethylenglykol, Diethylenglykol, Propylenglykol, Dipropylenglykol, Methylglykol, Triethylenglykol, Glycerin, 2-Methyl-1,3-Propandiol und Mischungen von zwei oder mehr der vorgenannten Alkohole.

14. Verfahren nach einem der vorstehenden Ansprüche, bei welchem das Polyurethanprodukt ein Polyurethanschaum, ein Polyurethanelastomer, ein Polyurethanklebstoff oder eine Polyurethanbeschichtung ist.

15. Verfahren nach einem der vorstehenden Ansprüche, bei welchem der Umsetzung von Schritt (B) Wasser allenfalls in einer solchen Menge zugeführt wird, dass der Massenanteil an Wasser, bezogen auf die Gesamtmasse aus in Schritt (B) vorhandenem Polyurethanprodukt, Katalysator, Alkohol und Wasser, in einem Bereich von 0 % bis 5,0 % liegt, wobei nach Beginn der Umsetzung des Polyurethanprodukts mit dem Alkohol in Gegenwart des Katalysators kein weiteres Wasser zugegeben wird.

## Claims

1. Method for recovering raw materials from polyurethane products, comprising the steps of:
(A) providing a polyurethane product based on an isocyanate component and a polyol component;
(B) reacting the polyurethane product with an alcohol in the presence of a catalyst, to give a first product mixture containing alcohol, polyols and carbamates, and optionally water;
(C) working up the first product mixture, comprising:
(C.I) mixing the first product mixture obtained in step (B) with an organic solvent, wherein the alcohol used in step (B) and the organic solvent used in step (C.I) are chosen such that the two are miscible under the conditions of step (C.I), i.e. at the temperature and the ratio of organic solvent to alcohol, optionally followed by a removal of solid constituents, to obtain a second product mixture;
(C.II) washing the second product mixture obtained in step (C.I) with an aqueous wash liquid, with partial hydrolysis of carbamates present in the second product mixture to release amines and alcohol, and phase separation into
a first solvent phase containing organic solvent used in step (C.I) and polyols, and
a first aqueous phase containing water, alcohol, carbamates and amines;
(C.III) working up the first solvent phase to obtain the polyols;
and optionally
(D) working up the first aqueous phase to obtain an amine corresponding to an isocyanate from the isocyanate component.

2. Method according to Claim 1, in which step (D) is conducted and comprises the following:
(D.I) mixing the first aqueous phase with an organic solvent and phase separation into
a second solvent phase containing organic solvent used in step (D.I) and polyols, and
a second aqueous phase containing alcohol, carbamates and amines.

3. Method according to Claim 1 or 2, in which step (D) comprises:
(D.II.a) hydrolysing the carbamates present in the first aqueous phase or, if step (D.I) is performed, in the second aqueous phase to obtain a third product mixture containing water, alcohol and amines;
(D.III.a) evaporating water out of the third product mixture to leave an amine-alcohol mixture;
(D.IV.a) evaporating an alcohol fraction from the amine-alcohol mixture to leave an amine phase;
(D.V) recovering from the amine phase an amine corresponding to an isocyanate from the isocyanate component.

4. Method according to Claim 3, in which the water evaporated in step (D.III.a) is recycled into step (C.II) as a constituent of the aqueous wash liquid.

5. Method according to Claim 3 or 4, in which the alcohol fraction evaporated in step (D.IV.a) is recycled into step (B).

6. Method according to Claim 1 or 2, in which step (D) comprises:
(D.II.b)evaporating a water-alcohol fraction from the first aqueous phase or, if step (D.I) is performed, from the second aqueous phase, leaving a carbamate phase;
(D.III.b)hydrolysing the carbamates present in the carbamate phase to obtain a third product mixture containing water, alcohol and amines;
(D.IV.b)evaporating an alcohol fraction from the third product mixture to obtain an amine phase;
(D.V) recovering from the amine phase an amine corresponding to an isocyanate from the isocyanate component.

7. Method according to Claim 6, in which the water-alcohol fraction evaporated in step (D.II.b) is recycled into step (C.II) as a constituent of the aqueous wash liquid.

8. Method according to either of Claims 6 and 7, in which the alcohol fraction evaporated in step (D.IV.b) is recycled into step (B).

9. Method according to any of Claims 3 to 8, further comprising the step of
(E) providing a crude product fraction of an amine, which is the same amine which is recovered in step (D.V), where the crude product fraction comprises, in addition to this amine, organic impurities boiling at a higher point than this amine;
where step (D.V) comprises:
(D.V.1) mixing the amine phase with the crude product fraction and working up the resulting mixture, to give the amine contained in the crude product fraction together with the amine recovered from the amine phase.

10. Method according to Claim 9,
in which the crude product fraction is taken from a bottom fraction of a distillation to purify the amine contained in the crude product fraction, where in step (D.V.1) additionally a solid residue is obtained which comprises the organic impurities boiling at a lower point than this amine;
or
in which the crude product fraction is taken from a crude product of a method for producing the amine contained in the crude product fraction, and comprises the organic impurities boiling at a lower point than this amine, and water, and is supplied to a distillation to remove water, in which a bottom fraction comprising this amine, organic impurities boiling at a lower point than this amine and organic impurities boiling at a higher point than this amine, and also a top fraction comprising removed water.

11. Method according to Claim 10, in which step (E) comprises:
(E.I) catalytically hydrogenating the nitro compound corresponding to the amine present in the crude product fraction, optionally in the presence of a solvent, to give a crude product comprising, in addition to this amine, organic impurities boiling at a higher point than this amine, organic impurities boiling at a lower point than this amine, and water;
(E.II) removing water from the crude product, to give a water-depleted method product;
(E.III) distilling the water-depleted method product, to give a distillate fraction of the amine present in the crude product fraction, and a bottom fraction containing, in addition to this amine, organic impurities boiling at a higher point than this amine.

12. Method according to any of the preceding claims,
in which the isocyanate component contains an isocyanate selected from the group consisting of tolylene diisocyanate, the di- and polyisocyanates of the diphenylmethane series, pentane 1,5-diisocyanate, hexamethylene 1,6-diisocyanate, isophorone diisocyanate, xylylene diisocyanate and mixtures of two or more of the aforementioned isocyanates,
and/or in which
the polyol component contains a polyol selected from the group consisting of a polyether polyol, a polyester, a polyetherester polyol, a polyethercarbonate polyol and a mixture of two or more of the aforementioned polyols.

13. Method according to any of the preceding claims, in which
the organic solvent in step (C.I) is selected from the group consisting of halogen-substituted aliphatic hydrocarbons, halogen-substituted alicyclic hydrocarbons, halogen-substituted aromatic hydrocarbons, and mixtures of two or more of the aforesaid organic solvents, and
the alcohol in step (B) is selected from the group consisting of methanol, ethanol, ethylene glycol, diethylene glycol, propylene glycol, dipropylene glycol, methylglycol, triethylene glycol, glycerol, 2-methylpropane-1,3-diol, and mixtures of two or more of the aforesaid alcohols.

14. Method according to any of the preceding claims, in which the polyurethane product is a polyurethane foam, a polyurethane elastomer, a polyurethane adhesive or a polyurethane coating.

15. Method according to any of the preceding claims, in which water is supplied to the reaction in step (B), if at all, in an amount such that the mass fraction of water, based on the total mass of polyurethane product in step (B), catalyst, alcohol and water, is in a range from 0% to 5.0%, with no further water being added after commencement of the reaction of the polyurethane product with the alcohol in the presence of the catalyst.

## Revendications

1. Procédé de récupération de matières premières à partir de produits de polyuréthane, comprenant les étapes :
(A) mise à disposition d'un produit de polyuréthane à base d'un composant isocyanate et d'un composant polyol ;
(B) transformation du produit de polyuréthane avec un alcool en présence d'un catalyseur, un premier mélange de produits, contenant un alcool, des polyols et des carbamates ainsi que le cas échéant de l'eau étant obtenu ;
(C) traitement du première mélange de produits, comprenant :
(C.I) mélange du premier mélange de produits obtenu dans l'étape (B) avec un solvant organique, l'alcool utilisé dans l'étape (B) et le solvant organique utilisé dans l'étape (C.I) étant choisis de telle sorte que les deux sont miscibles dans les conditions de l'étape (C.I), à savoir à sa température et dans son rapport de solvant organique à alcool, éventuellement suivi d'une séparation de constituants solides, avec obtention d'un deuxième mélange de produits ;
(C.II) lavage du deuxième mélange de produits obtenu dans l'étape (C.I) avec un liquide de lavage aqueux, les carbamates contenus dans le deuxième mélange de produits étant partiellement hydrolysés avec libération d'amines et d'alcool, et séparation des phases en
une première phase de solvant, contenant le solvant organique utilisé dans l'étape (C.I) et des polyols, et une première phase aqueuse, contenant de l'eau, un alcool, des carbamates et des amines ;
(C.III) traitement de la première phase de solvant avec obtention des polyols ;
et éventuellement
(D) traitement de la première phase aqueuse avec obtention d'une amine, qui correspond à un isocyanate du composant isocyanate.

2. Procédé selon la revendication 1, dans lequel une étape (D) est mise en œuvre et comprend ce qui suit :
(D.I) mélange de la première phase aqueuse avec un solvant organique et séparation des phases en
une deuxième phase de solvant, contenant le solvant organique utilisé dans l'étape (D.I) et des polyols, et une deuxième phase aqueuse, contenant un alcool, des carbamates et des amines.

3. Procédé selon la revendication 1 ou 2, dans lequel l'étape (D) comprend :
(D.II.a) hydrolyse des carbamates contenus dans la première phase aqueuse ou, lors de la mise en œuvre de l'étape (D.I), dans la deuxième phase aqueuse, avec obtention d'un troisième mélange de produits contenant de l'eau, un alcool et des amines ;
(D.III.a) évaporation de l'eau à partir du troisième mélange de produits en laissant un mélange amine-alcool ;
(D.IV.a) évaporation d'une fraction d'alcool à partir du mélange amine-alcool en laissant une phase d'amine ;
(D.V) obtention d'une amine qui correspond à un isocyanate du composant isocyanate, à partir de la phase d'amine.

4. Procédé selon la revendication 3, dans lequel l'eau évaporée dans l'étape (D.III.a) est recyclée dans l'étape (C.II) en tant que constituant du liquide de lavage aqueux.

5. Procédé selon la revendication 3 ou 4, dans lequel la fraction d'alcool évaporée dans l'étape (D.IV.a) est recyclée dans l'étape (B).

6. Procédé selon la revendication 1 ou 2, dans lequel l'étape (D) comprend :
(D.II.b) évaporation d'une fraction d'eau-alcool à partir de la première phase aqueuse ou, lors de la mise en œuvre de l'étape (D.I), à partir de la deuxième phase aqueuse en laissant une phase de carbamate ;
(D.III.b) hydrolyse des carbamates contenus dans la phase de carbamate avec obtention d'un troisième mélange de produits contenant de l'eau, un alcool et des amines ;
(D.IV.b) évaporation d'une fraction d'alcool à partir du troisième mélange de produits avec obtention d'une phase d'amine ;
(D.V) obtention d'une amine qui correspond à un isocyanate du composant isocyanate, à partir de la phase d'amine.

7. Procédé selon la revendication 6, dans lequel la fraction d'eau-alcool évaporée dans l'étape (D.II.b) est recyclée dans l'étape (C.II) en tant que constituant du liquide de lavage aqueux.

8. Procédé selon la revendication 6 ou 7, dans lequel la fraction d'alcool évaporée dans l'étape (D.IV.b) est recyclée dans l'étape (B).

9. Procédé selon l'une des revendications 3 à 8, comprenant en outre l'étape
(E) mise à disposition d'une fraction de produit brut d'une amine, qui est la même amine que celle obtenue dans l'étape (D.V), la fraction de produit brut contenant, outre cette amine, des impuretés organiques présentant un point d'ébullition supérieur à celui de cette amine ; l'étape (D.V) comprenant :
(D.V.1) mélange de la phase d'amine avec la fraction de produit brut et traitement du mélange obtenu avec obtention de l'amine contenue dans la fraction de produit brut conjointement avec l'amine obtenue à partir de la phase d'amine.

10. Procédé selon la revendication 9,
dans lequel la fraction de produit brut est prélevée d'une fraction de fond d'une distillation pour la purification de l'amine contenue dans la fraction de produit brut, un résidu solide contenant les impuretés organiques présentant un point d'ébullition supérieur à celui de cette amine étant en outre obtenu dans l'étape (D.V.1) ;
ou
dans lequel la fraction de produit brut est prélevée d'un produit brut d'un procédé de préparation de l'amine contenue dans la fraction de produit brut et contient des impuretés organiques présentant un point d'ébullition inférieur à celui de cette amine et de l'eau et est introduite dans une distillation pour la séparation de l'eau, dans laquelle sont obtenues une fraction de fond contenant cette amine, des impuretés organiques présentant un point d'ébullition inférieur à celui de cette amine et des impuretés organiques présentant un point d'ébullition supérieur à celui de cette amine ainsi qu'une fraction de tête contenant l'eau séparée.

11. Procédé selon la revendication 10, dans lequel l'étape (E) comprend :
(E.I) hydrogénation catalytique du composé nitro correspondant à l'amine contenue dans la fraction de produit brut, le cas échéant en présence d'un solvant, avec obtention d'un produit brut contenant, outre cette amine, encore des impuretés organiques présentant un point d'ébullition supérieur à celui de cette amine, des impuretés organiques présentant un point d'ébullition inférieur à celui de cette amine et de l'eau ;
(E.II) séparation de l'eau à partir du produit brut avec obtention d'un produit de procédé appauvri en eau ;
(E.III) distillation du produit de procédé appauvri en eau avec obtention d'une fraction de distillat de l'amine contenue dans la fraction de produit brut et d'une fraction de fond contenant, outre cette amine, des impuretés organiques présentant un point d'ébullition supérieur à celui de cette amine.

12. Procédé selon l'une des revendications précédentes, dans lequel le composant isocyanate contient un isocyanate choisi dans le groupe constitué par le diisocyanate de toluylène, les diisocyanates et les polyisocyanates de la série du diphénylméthane, le diisocyanate de 1,5-pentane, le diisocyanate de 1,6-hexaméthylène, le diisocyanate d'isophorone, le diisocyanate de xylylène et les mélanges de deux ou plus des isocyanates susmentionnés,
et/ou dans lequel
le composant polyol contient un polyol choisi dans le groupe constitué par un polyétherpolyol, un polyesterpolyol, un polyétheresterpolyol, un polyéthercarbonatepolyol et un mélange de deux ou plus des polyols susmentionnés.

13. Procédé selon l'une des revendications précédentes, dans lequel
le solvant organique dans l'étape (C.I) est choisi dans le groupe constitué par les hydrocarbures aliphatiques substitués par halogène, les hydrocarbures alicycliques substitués par halogène, les hydrocarbures aromatiques substitués par halogène et les mélanges de deux ou plus des solvants organiques susmentionnés et
l'alcool dans l'étape (B) est choisi dans le groupe constitué par le méthanol, l'éthanol, l'éthylèneglycol, le diéthylèneglycol, le propylèneglycol, le dipropylèneglycol, le méthylglycol, le triéthylèneglycol, le glycérol, le 2-méthyl-1,3-propanediol et les mélanges de deux ou plus des alcools susmentionnés.

14. Procédé selon l'une des revendications précédentes, dans lequel le produit de polyuréthane est une mousse de polyuréthane, un élastomère de polyuréthane, un adhésif de polyuréthane ou un revêtement de polyuréthane.

15. Procédé selon l'une des revendications précédentes, dans lequel la transformation de l'étape (B) est additionnée d'eau, éventuellement en une quantité telle que la proportion massique d'eau, par rapport à la masse totale du produit de polyuréthane, du catalyseur, de l'alcool et de l'eau présente dans l'étape (B), se situe dans une plage de 0% à 5,0%, aucune eau supplémentaire n'étant ajoutée après le début de la transformation du produit de polyuréthane avec l'alcool en présence du catalyseur.
